(19) Europäisches Patentamt
European Patent Office
Office européen des brevets

(11) EP 3 083 740 B1

(12) # EUROPÄISCHE PATENTSCHRIFT

(45) Veröffentlichungstag und Bekanntmachung des Hinweises auf die Patenterteilung:
**04.10.2017 Patentblatt 2017/40**

(21) Anmeldenummer: **14809892.4**

(22) Anmeldetag: **12.12.2014**

(51) Int Cl.:
***C08G 18/50*** (2006.01) ***C08G 18/71*** (2006.01)
***C08G 64/02*** (2006.01) ***C08G 64/18*** (2006.01)
***C08G 64/30*** (2006.01) ***C08G 64/32*** (2006.01)
***C08G 64/34*** (2006.01) ***C08G 65/26*** (2006.01)
***C08G 71/04*** (2006.01) ***C08G 18/44*** (2006.01)

(86) Internationale Anmeldenummer:
**PCT/EP2014/077509**

(87) Internationale Veröffentlichungsnummer:
**WO 2015/091246 (25.06.2015 Gazette 2015/25)**

(54) **EINSATZ VON URETHAN-ALKOHOLEN ZUR HERSTELLUNG VON POLYETHERCARBONATPOLYOLEN**

USE OF URETHANE ALCOHOLS FOR PRODUCING POLYETHER CARBONATE POLYOLS

UTILISATION D'ALCOOLS D'URÉTHANE POUR LA FABRICATION DE POLYÉTHERCARBONATEPOLYOLS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2013 EP 13197881**

(43) Veröffentlichungstag der Anmeldung:
**26.10.2016 Patentblatt 2016/43**

(73) Patentinhaber: **Covestro Deutschland AG**
**51373 Leverkusen (DE)**

(72) Erfinder:
- **HOFMANN, Jörg**
  **47800 Krefeld (DE)**
- **HEINZ, Monika**
  **51063 Köln (DE)**
- **NEFZGER, Hartmut**
  **50259 Pulheim (DE)**
- **LAEMMERHOLD, Kai**
  **67273 Weisenheim am Berg (DE)**
- **KLESCZEWSKI, Bert**
  **51069 Köln (DE)**
- **MÜLLER, Thomas Ernst**
  **52074 Aachen (DE)**
- **WOLF, Aurel**
  **42489 Wülfrath (DE)**
- **LANGANKE, Jens**
  **53894 Mechernich (DE)**

(74) Vertreter: **Levpat**
**c/o Covestro AG**
**Gebäude 4825**
**51365 Leverkusen (DE)**

(56) Entgegenhaltungen:
**EP-A1- 1 700 877** **EP-A1- 2 548 905**
**WO-A1-2012/004209** **US-B2- 6 881 856**

- **John H.Clements: "Reactive applications of cyclic alkylene carbonates", Ind. Eng. Chem. Res., Bd. 42 18. Januar 2003 (2003-01-18), Seiten 663-674, XP002721719, Gefunden im Internet: URL:http://www.huntsman.com/performance_products/Media%20Library/a_MC348531CFA3EA9A2 E040EBCD2B6B7B06/Products_MC348531D0B9FA9A 2E040EBCD2B6B7B06/Carbonates_MC348531D1109 A9A2E040EBCD2B6B7B06/files/reactive_applications_of_cyclic_alkylene_carbonates.pdf**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 083 740 B1

**Beschreibung**

Die vorliegende Erfindung betrifft ein Verfahren zur Herstellung von Polyethercarbonatpolyolen durch Anlagerung von Alkylenoxiden und Kohlendioxid ($CO_2$) an H-funktionelle Starterverbindungen, dadurch gekennzeichnet, dass mindestens ein Urethan-Alkohol als H-funktionelle Starterverbindung eingesetzt wird. Weitere Gegenstände der Erfindung sind Polyethercarbonatpolyole enthaltend eine Urethangruppe, die Polyethercarbonatpolyole erhältlich nach dem erfindungsgemäßen Verfahren, die Verwendung der erfindungsgemäßen Polyethercarbonatpolyole zur Herstellung eines Polyurethanpolymers sowie die resultierenden Polyurethanpolymere.

Die Herstellung von Polyethercarbonatpolyolen durch katalytische Umsetzung von Alkylenoxiden (Epoxiden) und Kohlendioxid in Anwesenheit von H-funktionellen Startersubstanzen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e, f, g und h für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Schema (I) gezeigte cyclische Carbonat (beispielsweise für R = $CH_3$ Propylencarbonat, im folgenden auch als cPC bezeichnet, oder für R = H Ethylencarbonat, im folgenden auch als cEC bezeichnet).

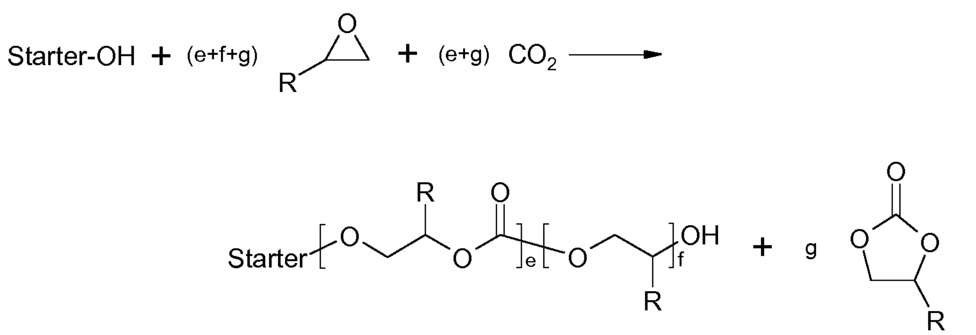

(I)

EP-A 0 222 453 offenbart ein Verfahren zur Herstellung von Polycarbonaten aus Alkylenoxiden und Kohlendioxid unter Verwendung eines Katalysatorsystems aus DMC-Katalysator und einem Co-Katalysator wie Zinksulfat. WO-A 2003/029325 offenbart ein Verfahren zur Herstellung von hochmolekularen aliphatischen Polyethercarbonatpolyolen (gewichtsmittleres Molekulargewicht größer als 30000 g/mol), bei dem ein Katalysator aus der Gruppe bestehend aus Zinkcarboxylat und Multimetallcyanidverbindung eingesetzt wird. WO-A 2008/092767 offenbart ein Verfahren zur Herstellung von Polyethercarbonatpolyolen, dadurch gekennzeichnet, dass eine oder mehrere H-funktionelle Startersubstanzen im Reaktor vorgelegt werden und dass eine oder mehrere H-funktionelle Startersubstanzen während der Reaktion kontinuierlich in den Reaktor zudosiert werden.

US 3,829,505 bzw. DE 1 595 759 beschreiben die Möglichkeit, OH-funktionelle Starterverbindungen im Überschuss mit aromatischen Polyisocyanaten umzusetzen, um auf diese Weise zu OH-Gruppen enthaltenden Polyurethanpolyolen mit mindestens 2 Urethangruppen zu gelangen, die als Starteroligomere für die DMC-Katalyse verwendet werden können.

US 3,654,224 beschreibt die Möglichkeit, Amide, inbesondere aromatische Amide wie z.B. Benzamid, als Starterverbindung für die DMC-Katalyse einzusetzen. Das Dokument EP 2 548 905 offenbart die Herstellung von Polyethercarbonatpolyolen durch katalytische Copolymerisation von Kohlendioxid (CO2) mit Alkylenoxiden in Gegenwart von PET-1 Polypropylenglykol. Die der vorliegenden Erfindung zu Grunde liegende Aufgabe bestand deshalb darin, das als Nebenprodukt anfallende cyclische Carbonat für die Herstellung von Polyethercarbonatpolyolen zu verwerten. Vorzugsweise sollen die so erhältlichen Polyethercarbonatpolyole für die Herstellung von Polyurethanen, insbesondere von Polyurethan-Weichschaumstoffen geeignet sein.

Diese Aufgabe wird erfindungsgemäß gelöst durch ein Verfahren zur Herstellung von Polyethercarbonatpolyolen durch Anlagerung von Alkylenoxiden und Kohlendioxid an H-funktionelle Starterverbindungen, dadurch gekennzeichnet, dass mindestens ein Urethan-Alkohol gemäß Formel (II)

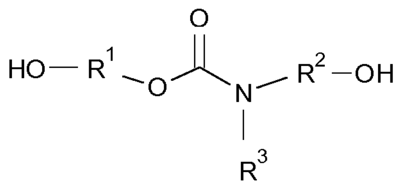

(II)

wobei

$R^1$ bedeutet lineares oder verzweigtes $C_2$ bis $C_{24}$ - Alkylen, das gegebenenfalls durch Heteroatome wie O, S oder N unterbrochen sein kann und substituiert sein kann, bevorzugt $CH_2$-$CH_2$ oder $CH_2$-$CH(CH_3)$,
$R^2$ bedeutet lineares oder verzweigtes $C_2$ bis $C_{24}$ - Alkylen, das gegebenenfalls durch Heteroatome wie O, S oder N unterbrochen sein kann und substituiert sein kann, bevorzugt $CH_2$-$CH_2$ oder $CH_2$-$CH(CH_3)$, und
$R^3$ bedeutet H, lineares oder verzweigtes $C_1$ bis $C_{24}$ - Alkyl, $C_3$ bis $C_{24}$ - Cycloalkyl, $C_4$ bis $C_{24}$ - Aryl, $C_5$ bis $C_{24}$ - Aralkyl, $C_2$ bis $C_{24}$ - Alkenyl, $C_2$ bis $C_{24}$ - Alkinyl, die jeweils gegebenenfalls durch Heteroatome wie O, S oder N unterbrochen sein können und/oder jeweils mit Alkyl, Aryl und/oder Hydroxyl substituiert sein können, bevorzugt H,
und wobei R1 bis R3 identisch oder voneinander verschieden sein können,
als H-funktionelle Starterverbindung eingesetzt wird.

Die Verwendung des Worts *ein* im Zusammenhang mit zählbaren Größen ist hierbei und im Folgenden nur dann als Zahlwort zu verstehen, wenn dies aus dem Zusammenhang hervorgeht (bspw. durch die Formulierung *"genau ein"*). Ansonsten umfassen Ausdrücke wie "ein Alkylenoxid", "ein Urethan-Alkohol" etc. immer auch solche Ausführungsformen, in denen zwei oder mehr Alkylenoxide, zwei oder mehr Urethan-Alkohole etc. eingesetzt werden.

Nachfolgend wird die Erfindung im Detail erläutert. Verschiedene Ausführungsformen sind dabei beliebig miteinander kombinierbar, solange sich für den Fachmann aus dem Kontext nicht eindeutig das Gegenteil ergibt.

Bevorzugt sind die Urethan-Alkohole der Formel (II) erhältlich durch die Umsetzung von cyclischen Carbonaten mit Aminoalkoholen. Unter Aminoalkoholen werden im Sinne der Erfindung Verbindungen verstanden, die mindestens eine Amino- und mindestens eine OH-Gruppe aufweisen. Als cyclische Carbonate werden dabei bevorzugt solche eingesetzt, die bei der Copolymerisation von Alkylenoxiden mit $CO_2$ als Nebenprodukte gebildet werden, beispielsweise sind dies Propylencarbonat (cPC) und Ethylencarbonat (cEC).

Als Aminoalkohole werden bevorzugt solche eingesetzt, die primäre oder sekundäre Aminogruppen, bevorzugt primäre Aminogruppen aufweisen, besonders bevorzugt wird als Aminoalkohol Ethanolamin oder Isopropanolamin eingesetzt.

Bevorzugt sind die Urethan-Alkohole der Formel (II) erhältlich durch Umsetzung von Propylencarbonat und/oder Ethylencarbonat mit Aminoalkoholen gemäß Formel (III),

$$HN(R^3)\text{-}R^2\text{-}OH \qquad \text{(III)}$$

wobei $R^2$ und $R^3$ die oben genannte Bedeutung haben.

Besonders bevorzugt sind die Urethan-Alkohole der Formel (II) erhältlich durch Umsetzung von Propylencarbonat und/oder Ethylencarbonat mit mindestens einem Amin ausgewählt aus der Gruppe bestehend aus Ethanolamin, Diethanolamin, (N-Methyl)-Ethanolamin, Isopropanolamin, Diisopropanolamin und Propanolamin.

Die Umsetzung der cyclischen Carbonate mit den Aminoalkoholen erfolgt bevorzugt bei 40 bis 80 °C, besonders bevorzugt bei 55 bis 65 °C. Die Reaktionszeit liegt bevorzugt bei 5 bis 40 h, besonders bevorzugt bei 10 bis 30 h.

In einer besonders vorteilhaften Ausführungsform wird das cyclische Carbonat im Überschuss eingesetzt. Bevorzugt beträgt das molare Verhältnis von cyclischem Carbonat zu Aminoalkohol 1,05 bis 3, besonders bevorzugt von 1,1 bis 2, ganz besonders bevorzugt von 1,2 bis 1,6. Das überschüssige cyclische Carbonat kann entweder direkt nach der Synthese des Urethan-Alkohols durch z.B. Dünnschichtverdampfung entfernt werden, oder kann im Urethan-Alkohol belassen und bei der Polyetherpolyolherstellung mit eingesetzt werden. Im zweiten genannten Fall wird das überschüssige cyclische Carbonat nach der Polyetherpolyolherstellung aus dem Produkt entfernt.

Neben den Urethan-Alkoholen können im erfindungsgemäßen Verfahren zusätzlich auch H-funktionelle Starterverbindungen ohne Urethangruppen eingesetzt werden, die nachfolgend beschrieben werden. Als geeignete H-funktionelle Startersubstanz ("Starter") können Verbindungen mit für die Alkoxylierung aktiven H-Atomen eingesetzt werden, die eine Molmasse von 18 bis 4500 g/mol, bevorzugt von 62 bis 500 g/mol und besonders bevorzugt von 62 bis 182 g/mol aufweisen. Die Fähigkeit zur Verwendung eines Starters mit einer niedrigen Molmasse ist ein deutlicher Vorteil gegenüber der Verwendung von oligomeren Startern, die mittels einer vorherigen Oxyalkylierung hergestellt sind. Insbesondere wird eine Wirtschaftlichkeit erreicht, die durch das Weglassen eines getrennten Oxyalkylierungsverfahrens

ermöglicht wird.
Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Startersubstanz wird beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine, Polytetrahydrofurane (z. B. PolyTHF® der BASF), Polytetrahydrofuranamine, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten, eingesetzt. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Startersubstanzen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als mono funktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielsweise Trimethylolpropan, Glycerin, Trishydroxyethylisocyanurat, Rizinusöl); vierwertige Alkohole (wie beispielsweise Pentaerythrit); Polyalkohole (wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an $\varepsilon$-Caprolacton.

Die H-funktionellen Startersubstanzen können auch aus der Substanzklasse der Polyetherpolyole ausgewählt sein, die ein Molekulargewicht $M_n$ im Bereich von 18 bis 4500 g/mol und eine Funktionalität von 2 bis 3 aufweisen. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Insbesondere werden Polyetherpolyole, die nach dem hier beschriebenen erfindungsgemäßen Verfahren erhältlich sind, eingesetzt. Diese als H-funktionelle Startersubstanzen eingesetzten Polyetherpolyole werden hierzu in einem separaten Reaktionsschritt zuvor hergestellt

Die H-funktionellen Startersubstanzen können auch aus der Substanzklasse der Polyesterpolyole ausgewählt sein. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole, die ebenfalls als Startersubstanzen zur Herstellung der Polyethercarbonatpolyole dienen können.

Des Weiteren können als H-funktionelle Startersubstanzen Polycarbonatdiole eingesetzt werden, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177.

In einer weiteren Ausführungsform der Erfindung können Polyethercarbonatpolyole als H-funktionelle Startersubstanzen eingesetzt werden.

Die H-funktionellen Startersubstanzen weisen im Allgemeinen eine Funktionalität (d.h. Anzahl an für die Polymerisation aktiven H-Atomen pro Molekül) von 1 bis 8, bevorzugt von 2 oder 3 auf. Die H-funktionellen Startersubstanzen werden entweder einzeln oder als Gemisch aus mindestens zwei H-funktionellen Startersubstanzen eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol und Polyetherpolyole mit einem Molekulargewicht Mn im Bereich von 150 bis 4500 g/mol und einer Funktionalität von 2 bis 3. Ein weiterer Gegenstand der Erfindung sind Polyethercarbonatpolyole enthaltend eine Struktureinheit der Formel (IV),

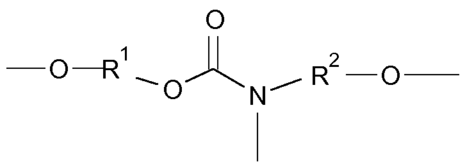

(IV)

wobei $R^1$ und $R^2$ die oben genannte Bedeutung haben. Vorzugsweise enthalten die erfindungsgemäßen Polyethercarbonatpolyole genau eine einzige Struktureinheit der Formel (IV) pro Polyethercarbonatpolyol-Molekül.

Die erfindungsgemäßen Polyethercarbonatpolyole enthalten bevorzugt eine Struktureinheit der Formel (IV), wobei $R^1$ $CH_2$-$CH_2$ oder $CH_2$-$CH(CH_3)$ bedeutet und $R^2$ $CH_2$-$CH_2$ oder $CH_2$-$CH(CH_3)$ bedeutet und wobei $R^1$ und $R^2$ identisch oder voneinander verschieden sein können, besonders bevorzugt bedeutet $R^1$ $CH_2$-$CH(CH_3)$ und $R^2$ $CH_2$-$CH(CH_3)$. Vorzugsweise enthalten die erfindungsgemäßen Polyethercarbonatpolyole genau eine einzige Struktureinheit der Formel (IV) pro Polyethercarbonatpolyol-Molekül.

Die erfindungsgemäßen Polyethercarbonatpolyole weisen bevorzugt eine OH-Zahl von 3 bis 400 mg KOH /g, besonders bevorzugt 10 bis 200 mg KOH/g auf.

Des Weiteren weisen die erfindungsgemäßen Polyethercarbonatpolyole eine Funktionalität von 2,0 bis 3,0, bevorzugt von 2,5 bis 2,95 auf.

Ein weiterer Gegenstand der vorliegenden Erfindung ist ein Verfahren zur Herstellung von Polyethercarbonatpolyolen durch Anlagerung von Alkylenoxiden und Kohlendioxid an H-funktionelle Starterverbindungen, dadurch gekennzeichnet, dass mindestens ein Urethan-Alkohol gemäß Formel (II) als H-funktionelle Starterverbindung eingesetzt wird und die Anlagerung in Gegenwart mindestens eines Doppelmetallcyanid-Katalysators (auch als DMC-Katalysator bezeichnet) erfolgt.

Für das erfindungsgemäße Verfahren geeignete DMC-Katalysatoren sind im Prinzip aus dem Stand der Technik bekannt (siehe z.B. US-A-3,404,109, US-A-3,829,505, US-A-3,941,849 und US-A-5,158,922). DMC-Katalysatoren, die z. B. in US-A-5,470,813, EP-A-0 700 949, EP-A-0 743 093, EP-A-0 761 708, WO 97/40086, WO 98/16310 und WO 00/47649 beschrieben sind, besitzen eine sehr hohe Aktivität in der Polymerisation von Alkylenoxiden und ggf. der Co-Polymerisation von Alkylenoxiden mit geeigneten Co-Monomeren wie beispielsweise Lactonen, cyclischen Carbonsäureanhydriden, Lactiden, cyclischen Carbonaten oder Kohlendioxid und ermöglichen die Herstellung von polymeren Polyolen bei sehr geringen Katalysatorkonzentrationen (25 ppm oder weniger), so dass eine Abtrennung des Katalysators aus dem fertigen Produkt im Allgemeinen nicht mehr erforderlich ist. Ein typisches Beispiel sind die in EP-A-0 700 949 beschriebenen hochaktiven DMC-Katalysatoren, die neben einer Doppelmetallcyanid-Verbindung (z. B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Es ist auch möglich, die in WO 2011/144523 offenbarten alkalischen DMC-Katalysatoren einzusetzen.

Zur Herstellung der Doppelmetallcyanid-Verbindungen geeignete cyanidfreie Metallsalze besitzen bevorzugt die allgemeine Formel (V),

$$M(X)_n \qquad (V)$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,

X steht für ein oder mehrere (d. h.verschiedene) Anionen, vorzugsweise ein Anion ausgewählt aus der Gruppe der Halogenide (d. h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

n ist 1, wenn X = Sulfat, Carbonat oder Oxalat ist und

n ist 2, wenn X = Halogenid, Hydroxid, Cyanat, Thiocyanat, Isocyanat, Isothiocyanat oder Nitrat ist;

oder geeignete cyanidfreie Metallsalze besitzen die allgemeine Formel (VI),

$$M_r(X)_3 \qquad (VI)$$

wobei

M ausgewählt ist aus den Metallkationen $Fe^{3+}$, $Al^{3+}$ und $Cr^{3+}$,
X steht für ein oder mehrere (d. h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalate ist und
r ist 1, wenn X = Halogenid, Hydroxid, Cyanat, Thiocyanat, Isocyanat, Isothiocyanat, Carboxylat oder Nitrat ist,

oder geeignete cyanidfreie Metallsalze besitzen die allgemeine Formel (VII),

$$M(X)_s \qquad (VII)$$

wobei

M ausgewählt ist aus den Metallkationen $Mo^{4+}$, $V^{4+}$ und $W^{4+}$
X steht für oder mehrere (d. h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Cyanat, Thiocyanat, Isocyanat, Isothiocyanat, Carboxylat oder Nitrat ist,

oder geeignete cyanidfreie Metallsalze besitzen die allgemeine Formel (VIII),

$$M(X)_t \qquad (VIII)$$

wobei

M ausgewählt ist aus den Metallkationen $Mo^{6+}$ und $W^{6+}$
X steht für ein oder mehrere (d. h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Cyanat, Thiocyanat, Isocyanat, Isothiocyanat, Carboxylat oder Nitrat ist.

Beispiele geeigneter cyanidfreier Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen-(II)chlorid, Cobalt(II)chlorid, Cobalt(II)thiocyanat, Nickel(II)chlorid und Nickel(II)nitrat. Es können auch Mischungen verschiedener Metallsalze eingesetzt werden.
Zur Herstellung der Doppelmetallcyanid-Verbindungen geeignete Metallcyanidsalze besitzen bevorzugt die allgemeine Formel (IX)

$$(Y)_a M'(CN)_b (A)_c \qquad (IX)$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. $Li^+$, $Na^+$, $K^+$, $Rb^+$, $Cs^+$) und Erdalkalimetall (d.h. $Be^{2+}$, $Ca^{2+}$, $Mg^{2+}$, $Sr^{2+}$, $Ba^{2+}$), A ausgewählt ist aus einem oder mehreren Anionen der Gruppe bestehend aus Halogeniden (d..h. Fluorid, Chlorid, Bromid, Iodid), Hydroxid, Sulfat, Carbonat, Cyanat, Thiocyanat, Isocyanat, Isothiocyanat, Carboxylat, Oxalat oder Nitrat und

a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Kaliumhexacyanocobaltat(III), Kaliumhexacyano-ferrat(II), Kaliumhexacyanoferrat(III), Calciumhexacyanocobaltat(III) und Lithiumhexacyano-cobaltat(III).

Bevorzugte Doppelmetallcyanid-Verbindungen, die in den DMC-Katalysatoren enthalten sind, sind Verbindungen der allgemeinen Formel (X)

$$M_x[M'_{x'},(CN)_y]_z \qquad (X),$$

worin M wie in Formel (V) bis (VIII) und
M' wie in Formel (IX) definiert ist, und
x, x', y und z sind ganzzahlig und so gewählt, dass die Elektronenneutralität der Doppelmetallcyanidverbindung gegeben ist.
Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen sind Zinkhexacyanocobaltat(III), Zink-hexacyanoiridat(III), Zinkhexacyanoferrat(III) und Cobalt(II)hexacyanocobaltat(III). Weitere Beispiele geeigneter Doppelmetallcyanid-Verbindungen sind z.B. US-A 5158922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US-A-5,158,922 (siehe insbesondere Spalte 6, Zeilen 9 bis 65), US-A-3,404,109, US-A-3,829,505, US-A-3,941,849, EP-A-0 700 949, EP-A-0 761 708, JP-A-4145123, US-A-5470813, EP-A-0 743 093 und WO-A-97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z. B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol, 2-Methyl-3-buten-2-ol, 2-Methyl-3-butin-2-ol, Ethylenglykol-mono-tert.-butylether und 3-Methyl-3-oxetan-methanol.

Optional werden bei der Herstellung der DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.

Bevorzugt werden bei der Herstellung der DMC-Katalysatoren im ersten Schritt die wässrigen Lösungen des Metallsalzes (z. B. Zinkchlorid), eingesetzt im stöchiometrischen Überschuss (mindestens 50 Mol-%) bezogen auf Metallcyanidsalz, (also mindestens ein molares Verhältnis von cyanidfreiem Metallsalz zu Metallcyanidsalz von 2,25 zu 1,00) und des Metallcyanidsalzes (z.B. Kaliumhexacyanocobaltat) in Gegenwart des organischen Komplexliganden (z.B. tert.-Butanol) umgesetzt, so dass sich eine Suspension bildet, die die Doppelmetallcyanid-Verbindung (z.B. Zinkhexacyanocobaltat), Wasser, überschüssiges cyanidfreies Metallsalz, und den organischen Komplexliganden enthält. Der organische Komplexligand kann dabei in der wässrigen Lösung des cyanidfreien Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des cyanidfreien Metallsalzes und des Metallcyanidsalzes und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d. h. der Herstellung der Suspension) erfolgt unter Einsatz einer Mischdüse, besonders bevorzugt unter Einsatz eines Strahldispergators wie in WO-A-01/39883 beschrieben.

Im **zweiten Schritt** erfolgt die Isolierung des Feststoffs (d. h. die Vorstufe des erfindungsgemäßen Katalysators) aus der Suspension durch bekannte Techniken, wie Zentrifugation oder Filtration.

In einer bevorzugten Ausführungsvariante zur Herstellung des Katalysators wird der isolierte Feststoff anschließend in einem **dritten Verfahrensschritt** mit einer wässrigen Lösung des organischen Komplexliganden gewaschen (z. B. durch Resuspendieren und anschließende erneute Isolierung durch Filtration oder Zentrifugation). Auf diese Weise können zum Beispiel wasserlösliche Nebenprodukte, wie Kaliumchlorid, aus dem Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Hierzu kann z.B. der erste Waschvorgang wiederholt werden. Bevorzugt ist es aber, für weitere Waschvorgänge nicht wässrige Lösungen zu verwenden, z.B. eine Mischung aus organischem Komplexliganden und weiterer komplexbildender Komponente.

Der isolierte und gegebenenfalls gewaschene Feststoff wird anschließend, gegebenenfalls nach Pulverisierung, bei Temperaturen von im allgemeinen 20 - 100 °C und bei Drücken von im allgemeinen 0,1 mbar bis Normaldruck (1013 mbar) getrocknet.

Ein bevorzugtes Verfahren zur Isolierung der DMC-Katalysatoren aus der Suspension durch Filtration, Filterkuchenwäsche und Trocknung wird in WO-A-01/80994 beschrieben.

Die Konzentration an eingesetztem DMC-Katalysator beträgt 5,0 ppm bis 1000 ppm, bevorzugt 10 ppm bis 900 ppm und besonders bevorzugt 20 ppm bis 800 ppm, bezogen auf die Masse des herzustellenden Polyethercarbonatpolyols. Je nach Anforderungsprofil der nachgeschalteten Anwendung kann der DMC-Katalysator im Produkt belassen oder (teilweise) abgetrennt werden Die (teilweise) Abtrennung des DMC-Katalysators kann beispielsweise durch Behandlung mit Adsorbentien erfolgen. Verfahren zur Abtrennung von DMC-Katalysatoren sind beispielsweise beschrieben in US-A-4,987,271, DE-A-3132258, EP-A-0 406 440, US-A-5,391,722, US-A-5,099,075, US-A-4,721,818, US-A-4,877,906 und EP-A-0 385 619.

Für das erfindungsgemäße Verfahrens geeignete Alkylenoxide haben 2 bis 24 Kohlenstoffatome. Bei den Alkylenoxiden mit 2 bis 24 Kohlenstoffatomen handelt es sich bevorzugt um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach Alkylenoxidierte Fette als Mono-, Di- und Triglyceride, Alkylenoxidierte Fettsäuren, $C_1$-$C_{24}$-Ester von Alkylenoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, sowie Alkylenoxidfunktionelle Alkyloxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropyl-ethyldiethoxysilan und 3-Glycidyloxypropyltriisopropoxysilan. Bevorzugt wird als Alkylenoxid wenigstens ein Akylenoxid ausgewählt aus der Gruppe bestehend aus Ethylenoxid und Propylenoxid eingesetzt.

Weitere mit Alkylenoxiden und Kohlendioxid nach dem erfindungsgemäßen Verfahrens unter DMC-Katalyse gemeinsam polymerisierbare Monomere sind alle Sauerstoffhaltigen cyclischen Verbindungen, insbesondere Lactone, Lactide, aliphatische und aromatische cyclische Carbonsäureanhydride und cyclische Carbonate. Ihre Verwendung wird beschrieben in US-A-3,538,043, US-A-4,500,704, US-A-5,032,671, US-A-6,646,100, EP-A-0 222 453 und WO-A-2008/013731.

Im Folgenden werden mehrere Varianten zur Durchführung des erfindungsgemäßen Verfahrens zur Herstellung von Polyethercarbonatpolyolen durch Anlagerung von Alkylenoxiden und Kohlendioxid an H-funktionelle Starterverbindungen, dadurch gekennzeichnet, dass mindestens ein Urethan-Alkohol gemäß Formel (II) als H-funktionelle Starterverbindung eingesetzt wird, detailliert beschrieben. Die Darstellung ist lediglich beispielhaft und nicht als die vorliegende Erfindung beschränkend zu verstehen.

Beispielsweise ist das erfindungsgemäße Verfahren dadurch gekennzeichnet, dass

(α) der Urethan-Alkohol gemäß Formel (II) oder ein Suspensionsmittel vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator dem Urethan-Alkohol gemäß Formel (II) oder dem Suspensionsmittel vor oder nach der Trocknung zugesetzt wird,

(β) zur Aktivierung eine Teilmenge (bezogen auf die Gesamtmenge der bei der Aktivierung und Copolymerisation eingesetzten Menge an Alkylenoxiden) von Alkylenoxid zu der aus Schritt (α) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann,

(γ) Alkylenoxid, Kohlendioxid und gegebenenfalls Urethan-Alkohol gemäß Formel (II) zu der aus Schritt (β) resultierenden Mischung zugesetzt werden ("Copolymerisation"),

wobei wenigstens in einem der Schritte (α) oder (γ) mindestens ein Urethan-Alkohol gemäß Formel (II) als H-funktionelle Startersubstanz zugesetzt wird.

Die gegebenenfalls eingesetzten Suspensionsmittel enthalten keine H-funktionellen Gruppen. Als Suspensionsmittel sind alle polar-aprotischen, schwach polar-aprotischen und unpolaraprotischen Lösungsmittel geeignet, die jeweils keine H-funktionellen Gruppen enthalten. Als Suspensionsmittel kann auch eine Mischung aus zwei oder mehrerer dieser Suspensionsmittel eingesetzt werden. Beispielhaft seien an dieser Stelle folgende polar-aprotischen Suspensionsmittel genannt: 4-Methyl-2-oxo-1,3-dioxolan (im Folgenden auch als cyclisches Propylencarbonat oder cPC bezeichnet), 1,3-Dioxolan-2-on (im Folgenden auch als cyclisches Ethylencarbonat oder cEC bezeichnet), Aceton, Methylethylketon, Acetonitril, Nitromethan, Dimethyl¬sulf¬oxid, Sulfolan, Dimethylformamid, Dimethylacetamid und N-Methylpyrrolidon. Zu der Gruppe der unpolar- und schwach polar-aprotischen Suspensionsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlen¬wasserstoffe, wie z.B., Chloroform, Chlorbenzol, Dichlorbenzol und Tetra¬chlor¬kohlenstoff. Bevorzugt als Suspensionsmittel werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on.

Zu Schritt (α): (Trocknung)

Vorzugsweise wird in Schritt (α) ein Suspensionsmittel, das keine H-funktionellen Gruppen enthält, im Reaktor gegebenenfalls gemeinsam mit DMC-Katalysator vorgelegt, und dabei wird keine H-funktionelle Startersubstanz im Reaktor vorgelegt. Alternativ können auch in Schritt (α) ein Suspensionsmittel, das keine H-funktionellen Gruppen enthält, und zusätzlich eine Teilmenge des Urethan-Alkohols gemäß Formel (II) sowie gegebenenfalls DMC-Katalysator im Reaktor vorgelegt werden, oder es können auch in Schritt (α) eine Teilmenge des Urethan-Alkohol gemäß Formel (II) sowie gegebenenfalls DMC-Katalysator im Reaktor vorgelegt werden. Weiterhin können auch in Schritt (α) die Gesamtmenge des Urethan-Alkohol gemäß Formel (II) sowie gegebenenfalls DMC-Katalysator im Reaktor vorgelegt werden.

Der DMC-Katalysator wird vorzugsweise in einer Menge eingesetzt, so dass der Gehalt an DMC-Katalysator im resultierenden Endprodukt 10 bis 10000 ppm, besonders bevorzugt 20 bis 5000 ppm und höchst bevorzugt 50 bis 500 ppm beträgt.

In einer bevorzugten Ausführungsform wird in das resultierende Gemisch aus DMC-Katalysator mit Suspensionsmittel und/oder Urethan-Alkohol gemäß Formel (II) bei einer Temperatur von 90 bis 150°C, besonders bevorzugt von 100 bis 140°C Inertgas (beispielsweise Argon oder Stickstoff), ein Inertgas-Kohlendioxid-Gemisch oder Kohlendioxid eingeleitet und gleichzeitig ein reduzierter Druck (absolut) von 10 mbar bis 800 mbar, besonders bevorzugt von 50 mbar bis 200 mbar angelegt.

In einer alternativen bevorzugten Ausführungsform wird das resultierende Gemisch aus DMC-Katalysator mit Suspensionsmittel und/oder Urethan-Alkohol gemäß Formel (II) bei einer Temperatur von 90 bis 150°C, besonders bevorzugt von 100 bis 140°C mindestens einmal, vorzugsweise dreimal mit 1,5 bar bis 10 bar (absolut), besonders bevorzugt 3 bar bis 6 bar (absolut) eines Inertgases (beispielsweise Argon oder Stickstoff), eines Inertgas-Kohlendioxid-Gemisches oder Kohlendioxid beaufschlagt und jeweils anschließend der Überdruck auf ca. 1 bar (absolut) reduziert.

Der DMC-Katalysator kann beispielsweise in fester Form oder als Suspension in einem oder mehreren Suspensionsmittel(n) oder als Suspension in einem Urethan-Alkohol gemäß Formel (II) zugegeben werden.

In einer weiteren bevorzugten Ausführungsform wird in Schritt (α)

(α-I) Suspensionsmittel und/oder eine Teilmenge oder die Gesamtmenge an Urethan-Alkohol gemäß Formel (II) vorgelegt und

(α-II) die Temperatur des Suspensionsmittels und/oder des Urethan-Alkohols gemäß Formel (II) auf 50 bis 200°C,

bevorzugt 80 bis 160°C, besonders bevorzugt 100 bis 140°C gebracht und/oder der Druck im Reaktor auf weniger als 500 mbar, bevorzugt 5 mbar bis 100 mbar erniedrigt, wobei gegebenenfalls ein Inertgas-Strom (beispielsweise von Argon oder Stickstoff), ein Inertgas-Kohlendioxid-Strom oder ein Kohlendioxid-Strom durch den Reaktor geleitet wird,

wobei der Doppelmetallcyanid-Katalysator zum Suspensionsmittel und/oder zum Urethan-Alkohol gemäß Formel (II) in Schritt (α-I) oder unmittelbar anschließend in Schritt (α-II) zugesetzt wird, und
wobei das Suspensionsmittel keine H-funktionellen Gruppen enthält.

Zu Schritt (β): (Aktivierung)

Schritt (β) dient der Aktivierung des DMC-Katalysators. Dieser Schritt kann gegebenenfalls unter Inertgasatmosphäre, unter einer Atmosphäre aus Inertgas-Kohlendioxid-Gemisch oder unter einer Kohlendioxid-Atmosphäre durchgeführt werden. Als Aktivierung im Sinne dieser Erfindung wird ein Schritt bezeichnet, bei dem eine Teilmenge Alkylenoxid bei Temperaturen von 90 bis 150°C zur DMC-Katalysator-Suspension zugegeben wird und dann die Zugabe des Alkylenoxids unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von Alkylenoxid und gegebenenfalls CO2 ein Druckabfall im Reaktor beobachtet wird. Der Verfahrensschritt der Aktivierung ist die Zeitspanne von der Zugabe der Teilmenge an Alkylenoxid, gegebenenfalls in Gegenwart von CO2, zum DMC-Katalysator bis zum Auftreten der Wärmeentwicklung. Gegebenenfalls kann die Teilmenge Alkylenoxid in mehreren Einzelschritten, gegebenenfalls in Gegenwart von CO2, zum DMC-Katalysator gegeben werden und dann jeweils die Zugabe des Alkylenoxids unterbrochen werden. Im diesem Fall umfasst der Verfahrensschritt der Aktivierung die Zeitspanne von der Zugabe der ersten Teilmenge an Alkylenoxid, gegebenenfalls in Gegenwart von CO2, zum DMC-Katalysator bis zum Auftreten der Wärmeentwicklung nach Zugabe der letzten Teilmenge an Alkylenoxid. Im Allgemeinen kann dem Aktivierungsschritt ein Schritt zum Trocknen des DMC-Katalysators und ggf. des Urethan-Alkohol gemäß Formel (II) bei erhöhter Temperatur und/oder reduziertem Druck, gegebenenfalls unter Durchleiten eines Inertgases durch die Reaktionsmischung, vorgelagert sein.

Die Dosierung eines oder mehrerer Alkylenoxide (und gegebenenfalls des Kohlendioxids) kann prinzipiell in unterschiedlicher Weise erfolgen. Der Start der Dosierung kann aus dem Vakuum heraus oder bei einem zuvor gewählten Vordruck erfolgen. Der Vordruck wird bevorzugt durch Einleiten eines Inertgases (wie beispielsweise Stickstoff oder Argon) oder von Kohlendioxid eingestellt, wobei der Druck(absolut) 5 mbar bis 100 bar, vorzugsweise 10 mbar bis 50 bar und bevorzugt 20 mbar bis 50 bar beträgt.

In einer bevorzugten Ausführungsform beträgt die bei der Aktivierung in Schritt (β) eingesetzte Menge von einem oder mehreren Alkylenoxiden 0,1 bis 25,0 Gew.-%, bevorzugt 1,0 bis 20,0 Gew.-%, besonders bevorzugt 2,0 bis 16,0 Gew.-% (bezogen auf die im Schritt (α) eingesetzte Menge an Suspensionsmittel und/oder Urethan-Alkohol gemäß Formel (II)). Das Alkylenoxid kann in einem Schritt oder portionsweise in mehreren Teilmengen zugegeben werden. Bevorzugt wird nach Zugabe einer Teilmenge an Alkylenoxid die Zugabe des Alkylenoxids bis zum Auftreten der Wärmeentwicklung unterbrochen und erst dann die nächste Teilmenge an Alkylenoxid zugegeben. Bevorzugt ist auch eine zweistufige Aktivierung (Schritt β), wobei

(β1) in einer ersten Aktivierungsstufe die Zugabe einer ersten Teilmenge von Alkylenoxid unter Inertgasatmosphäre erfolgt und
(β2) in einer zweiten Aktivierungsstufe die Zugabe einer zweiten Teilmenge von Alkylenoxid unter Kohlendioxid-Atmosphäre erfolgt.

Zu Schritt (γ): (Copolymerisation)

Für das erfindungsgemäße Verfahren hat sich gezeigt, dass Schritt (γ) vorteilhafterweise bei 50 bis 150°C, bevorzugt bei 60 bis 145°C, besonders bevorzugt bei 70 bis 140°C und ganz besonders bevorzugt bei 90 bis 130°C durchgeführt wird. Unterhalb von 50°C läuft die Reaktion unter Bildung eines Polyethercarbonatpolyols nur sehr langsam ab. Bei Temperaturen oberhalb von 150°C steigt die Menge an unerwünschten Nebenprodukten stark an.

Die Dosierung eines oder mehrerer Alkylenoxide und des Kohlendioxids kann simultan, wechselweise oder sequentiell erfolgen, wobei die gesamte Kohlendioxidmenge auf einmal oder dosiert über die Reaktionszeit zugegeben werden kann. Es ist möglich, während der Zugabe des Alkylenoxids den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung eines oder mehrerer Alkylenoxide erfolgt simultan, wechselweise oder sequentiell zur Kohlendioxid Dosierung. Es ist möglich, das Alkylenoxid mit konstanter Dosierrate zu dosieren oder die Dosierrate allmählich oder schrittweise zu steigern oder zu senken oder das Alkylenoxid portionsweise zuzugeben. Bevorzugt wird das Alkylenoxid mit konstanter Dosierrate dem Reaktionsgemisch zugegeben. Werden mehrere Alkylenoxide zur Synthese der Polyethercarbonatpolyole eingesetzt, so können die Alkylenoxide einzeln oder als Gemisch dosiert werden. Die Dosierung der Alkylenoxide kann simultan, wechselweise oder sequentiell über jeweils separate Dosierungen (Zugaben) erfolgen oder über eine oder mehrere Dosierungen, wobei die Alkylenoxide einzeln oder als Gemisch dosiert werden können. Über die Art und/oder Reihenfolge der Dosierung der Alkylenoxide und/oder des Kohlendioxids ist es möglich, statistische, alternierende, blockartige oder gradientenartige Polyethercarbonatpolyole zu syn¬thetisieren.

Vorzugsweise wird ein Überschuss an Kohlendioxid bezogen auf die berechnete Menge an eingebautem Kohlendioxid im Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Polyethercarbonatpolyole als vorteilhaft erwiesen. Es ist möglich, das Kohlendioxid kontinuierlich oder diskontinuierlich zuzuführen. Dies hängt davon ab, wie schnell die Alkylenoxide und das $CO_2$ verbraucht werden und ob das Produkt gegebenenfalls $CO_2$-freie Polyether-Blöcke oder Blöcke mit unterschiedlichem $CO_2$-Gehalt enthalten soll. Die Menge des Kohlendioxids (angegeben als Druck) kann bei der Zugabe der Alkylenoxide ebenso variieren. Je nach den gewählten Reaktionsbedingungen ist es möglich, das $CO_2$ im gasförmigen, flüssigen oder überkritischen Zustand in den Reaktor einzuleiten. $CO_2$ kann auch als Feststoff in den Reaktor gegeben werden und dann unter den gewählten Reaktionsbedingungen in den gasförmigen, gelösten, flüssigen und/oder überkritischen Zustand übergehen.

Bei einem Verfahren mit Dosierung von Urethan-Alkohol gemäß Formel (II) in Schritt (γ) kann die Dosierung des Urethan-Alkohols gemäß Formel (II), eines oder mehrerer Alkylenoxid(e) und gegebenenfalls auch des Kohlendioxids simultan oder sequentiell (portionsweise) erfolgen, beispielsweise kann die gesamte Kohlendioxidmenge, die Menge an Urethan-Alkohol gemäß Formel (II) und/oder die in Schritt (γ) dosierte Menge an Alkylenoxiden auf einmal oder kontinuierlich zugegeben werden. Der hier verwendete Begriff "kontinuierlich" kann als Modus der Zugabe eines Reaktanden so definiert werden, dass eine für die Copolymerisation wirksame Konzentration des Reaktanden aufrechterhalten wird, d.h. beispielsweise kann die Dosierung mit einer konstanten Dosierrate, mit einer variierenden Dosierrate oder portionsweise erfolgen.

Es ist möglich, während der Zugabe des Alkylenoxids und/oder des Urethan-Alkohols gemäß Formel (II) den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung eines oder mehrerer Alkylenoxid(e) und/oder des Urethan-Alkohols gemäß Formel (II) erfolgt simultan oder sequentiell zur Kohlendioxid-Dosierung. Es ist möglich, das Alkylenoxid mit konstanter Dosierrate zu dosieren oder die Dosierrate allmählich oder schrittweise zu steigern oder zu senken oder das Alkylenoxid portionsweise zuzugeben. Bevorzugt wird das Alkylenoxid mit konstanter Dosierrate dem Reaktionsgemisch zugegeben. Werden mehrere Alkylenoxide zur Synthese der Polyethercarbonatpolyole eingesetzt, so können die Alkylenoxide einzeln oder als Gemisch dosiert werden. Die Dosierung der Alkylenoxide bzw. des Urethan-Alkohols gemäß Formel (II) kann simultan oder sequentiell über jeweils separate Dosierungen (Zugaben) erfolgen oder über eine oder mehrere Dosierungen, wobei die Alkylenoxide bzw. der Urethan-Alkohol gemäß Formel (II) einzeln oder als Gemisch dosiert werden können. Über die Art und/oder Reihenfolge der Dosierung des Urethan-Alkohols gemäß Formel (II), der Alkylenoxide und/oder des Kohlendioxids ist es möglich, statistische, alternierende, blockartige oder gradientenartige Polyethercarbonatpolyole zu syn¬thetisieren.

In einer bevorzugten Ausführungsform wird in Schritt (γ) die Dosierung des Urethan-Alkohols gemäß Formel (II) zeitlich vor der Zugabe des Alkylenoxids beendet.

Eine bevorzugte Ausführungsform des erfindungsgemäßen Verfahrens ist unter anderem dadurch gekennzeichnet, dass in Schritt (γ) die Gesamtmenge des Urethan-Alkohols gemäß Formel (II) zugegeben wird, also in Schritt (α) ein Suspensionsmittel eingesetzt wird. Diese Zugabe kann mit einer konstanten Dosierrate, mit einer variierenden Dosierrate oder portionsweise erfolgen.

Bevorzugt werden die Polyethercarbonatpolyole in einem kontinuierlichen Verfahren hergestellt, das sowohl eine kontinuierliche Copolymerisation als auch eine kontinuierliche Zugabe des Urethan-Alkohols gemäß Formel (II) umfasst. Gegenstand der Erfindung ist daher auch ein Verfahren, wobei in Schritt (γ) ein der mehrere Urethan-Alkohole gemäß Formel (II), ein oder mehrere Alkylenoxid(e) sowie DMC-Katalysator in Gegenwart von Kohlendioxid ("Copolymerisation") kontinuierlich in den Reaktor dosiert werden und wobei das resultierende Reaktionsgemisch (enthaltend das Reaktionsprodukt) kontinuierlich aus dem Reaktor entfernt wird. Vorzugsweise wird dabei in Schritt (γ) der DMC-Katalysator, welcher in dem Urethan-Alkohol gemäß Formel (II) suspendiert wurde, kontinuierlich zugegeben. Die Dosierung des Alkylenoxids, des Urethan-Alkohol gemäß Formel (II) und des DMC-Katalysators kann über separate oder gemeinsame Dosierstellen erfolgen. In einer bevorzugten Ausführungsform werden das Alkylenoxid und der Urethan-Alkohol gemäß Formel (II) über separate Dosierstellen kontinuierlich dem Reaktionsgemisch zugeführt. Diese Zugabe des Urethan-Alkohols gemäß Formel (II) kann als kontinuierliche Zudosierung in den Reaktor oder portionsweise erfolgen.

Beispielsweise wird für das kontinuierliche Verfahren zur Herstellung der Polyethercarbonatpolyole gemäß den

Schritten (α) und (β) eine aktivierte DMC-Katalysator-Suspensionsmittel-Mischung hergestellt, dann werden gemäß Schritt (γ)

(γ1) jeweils eine Teilmenge an Urethan-Alkohol gemäß Formel (II), einem oder mehreren Alkylenoxid(en) und Kohlendioxid zudosiert zum Initiieren der Copolymerisation, und
(γ2) während des Fortschreitens der Copolymerisation jeweils die verbleibende Menge an DMC-Katalysator, Urethan-Alkohol gemäß Formel (II) und Alky¬lenoxid(en) in Gegenwart von Kohlendioxid kontinuierlich zudosiert, wobei gleichzeitig resultierendes Reaktionsgemisch kontinuierlich aus dem Reaktor entfernt wird.

In Schritt (γ) wird der DMC-Katalysator bevorzugt suspendiert in Urethan-Alkohol gemäß Formel (II) zugegeben.

Die Schritte (α), (β) und (γ) können in demselben Reaktor oder jeweils separat in unterschiedlichen Reaktoren durchgeführt werden. Besonders bevorzugte Reaktortypen sind: Rohrreaktoren, Rührkessel, Schlaufenreaktoren.

Die Schritte (α), (β) und (γ) können in einem Rührkessel durchgeführt werden, wobei der Rührkessel je nach Ausführungsform und Betriebsweise über den Reaktormantel, innen liegende und/oder in einem Umpumpkreislauf befindliche Kühlflächen gekühlt wird. Sowohl im Semi-batch-Verfahren, bei dem das Produkt erst nach Ende der Reaktion entnommen wird, als auch im kontinuierlichen Verfahren, bei dem das Produkt kontinuierlich entnommen wird, ist besonders auf die Dosiergeschwindigkeit des Alkylenoxids zu achten. Sie ist so einzustellen, dass trotz der inhibierenden Wirkung des Kohlendioxids die Alkylenoxide genügend schnell abreagieren.

In einer bevorzugten Ausführungsform wird die gemäß den Schritten (α) und (β) resultierende aktivierte DMC-Katalysator enthaltende Mischung in demselben Reaktor weiter mit einem oder mehreren Alkylenoxid(en), Urethan-Alkohol gemäß Formel (II) und Kohlendioxid umgesetzt. In einer weiteren bevorzugten Ausführungsform wird die gemäß den Schritten (α) und (β) resultierende aktivierte DMC-Katalysator enthaltende Mischung in einem anderen Reaktionsbehältnis (beispielsweise einem Rührkessel, Rohrreaktor oder Schlaufenreaktor) weiter mit Alkylenoxiden, einer oder mehreren Startersubstanz(en) und Kohlendioxid umgesetzt.

Bei Reaktionsführung in einem Rohrreaktor wird die gemäß den Schritten (α) und (β) resultierende aktivierte DMC-Katalysator enthaltende Mischung, ein Urethan-Alkohol gemäß Formel (II), ein oder mehrere Alkylenoxid(e) und Kohlendioxid kontinuierlich durch ein Rohr gepumpt. Die molaren Verhältnisse der Reaktionspartner variieren je nach gewünschtem Polymer. In einer bevorzugten Ausführungsform wird hierbei Kohlendioxid in seiner flüssigen oder überkritischen Form zudosiert, um eine optimale Mischbarkeit der Komponenten zu ermöglichen. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die gleichzeitig die Durchmischung und Wärmeabfuhr verbessern.

Schlaufenreaktoren können ebenfalls zur Durchführung der Schritte (α), (β) und (γ) verwendet werden. Hierunter fallen im Allgemeinen Reaktoren mit Stoffrückführung, wie beispielsweise ein Strahlschlaufenreaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren. Der Einsatz eines Schlaufenreaktors ist insbesondere deshalb von Vorteil, weil hier eine Rückvermischung realisiert werden kann, so dass die Konzentration an freien Alkylenoxiden in der Reaktionsmischung im optimalen Bereich, vorzugsweise im Bereich > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung) gehalten werden kann.

Vorzugsweise werden die Schritte (α) und (β) in einem ersten Reaktor durchgeführt, und das resultierende Reaktionsgemisch dann in einen zweiten Reaktor für die Copolymerisation gemäß Schritt (γ) überführt. Es ist aber auch möglich, die Schritte (α), (β) und (γ) in einem Reaktor durchzuführen.

Das erfindungsgemäße Verfahren kann auch so geführt werden, dass anfänglich ein gemäß den Schritten (α) und (β) in einem Suspensionsmittel aktivierter DMC-Katalysator verwendet wird, und während der Copolymerisation (γ) der DMC-Katalysator ohne vorherige Aktivierung zugesetzt wird. Ein besonders vorteilhaftes Merkmal der bevorzugten Ausführungsform der vorliegenden Erfindung ist also die Fähigkeit zur Verwendung von "frischen" DMC-Katalysatoren ohne Aktivierung für die Teilmenge an DMC-Katalysator, der kontinuierlich im Schritt (γ) zugegeben wird. Eine analog zu Schritt (β) durchzuführende Aktivierung von DMC-Katalysatoren umfasst nicht nur zusätzliche Aufmerksamkeit der Bedienungsperson, wodurch sich die Fertigungskosten erhöhen, sondern sie erfordert auch einen Druck-Reaktionsbehälter, wodurch sich auch die Kapitalkosten beim Bau einer entsprechenden Produktionsanlage erhöhen. Hier wird "frischer" DMC-Katalysator als nicht aktivierter DMC-Katalysator in fester Form oder in Form einer Aufschlämmung in einer Star¬tersubstanz oder Suspensionsmittel definiert. Die Fähigkeit des vorliegenden Verfahrens zur Verwendung von fri¬schem, nicht aktiviertem DMC-Katalysator im Schritt (γ) ermöglicht signifikante Einsparungen bei der kommerziellen Herstellung von Polyethercarbonatpolyolen und ist eine bevorzugte Ausführungsform der vorliegenden Erfindung.

Der hier verwendete Begriff "kontinuierlich" kann als Modus der Zugabe eines relevanten Katalysators oder Reaktanden so definiert werden, dass eine im Wesentlichen kontinuierliche wirksame Konzentration des DMC-Katalysators oder des Reaktanden aufrechterhalten wird. Die Katalysatorzufuhr kann echt kontinuierlich oder in relativ eng

beabstandeten Inkrementen erfolgen. Gleichermaßen kann eine kontinuierliche Starterzugabe echt kontinuierlich sein oder in Inkrementen erfolgen. Es würde nicht vom vorliegenden Verfahren abweichen, einen DMC-Katalysator oder Reaktanden inkrementell so zuzugeben, dass die Konzentration der zugegebenen Ma¬terialien für einige Zeit vor der nächsten inkrementellen Zugabe im Wesentlichen auf null abfällt. Es ist jedoch bevorzugt, dass die DMC-Katalysatorkonzentration während des Hauptteils des Verlaufs der kontinuierlichen Reak¬tion im Wesentlichen auf derselben Konzentration gehalten wird und dass Startersubstanz während des Hauptteils des Copolymerisations-Verfahrens vorhanden ist. Eine inkrementelle Zugabe von DMC-Katalysator und/oder Reaktant, die die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu einem vorherigen Punkt im Verfahren zurückgeführt wird, wodurch durch inkrementelle Zugaben bewirkte Diskontinuitäten geglättet werden.

Schritt (δ)

Optional kann in einem Schritt (δ) das bei der Copolymerisation resultierende Reaktionsgemisch, bevorzugt das in Schritt (γ) kontinuierlich entfernte Reaktionsgemisch, welches im allgemeinen einen Gehalt von 0,05 Gew.-% bis 10 Gew.-% Alkylenoxid enthält, in einen Nachreaktor überführt werden, in dem im Wege einer Nachreaktion der Gehalt an freiem Alkylenoxid auf weniger als 0,05 Gew.-% im Reaktionsgemisch reduziert wird. Als Nachreaktor kann beispielsweise ein Rohrreaktor, ein Schlaufenreaktor oder ein Rührkessel dienen. Bevorzugt liegt der Druck in diesem Nachreaktor bei demselben Druck wie in dem Reaktionsapparat, in dem der Reaktionsschritt (γ) durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt (γ) ganz oder teilweise abgelassen und der nachgeschaltete Reaktor bei Normaldruck oder einem geringen Überdruck betrieben. Die Temperatur in dem nachgeschalteten Reaktor liegt bevorzugt bei 50 bis 150°C und besonders bevorzugt bei 80 bis 140°C.

In dem resultierenden Polyethercarbonatpolyol kann anschließend thermisch, bevorzugt bei einer Temperatur von 80°C bis 200 °C, der Gehalt an leicht flüchtigen Bestandteilen reduziert werden. Zur thermischen Reduktion der flüchtigen Bestandteile können die dem Fachmann aus dem Stand der Technik allgemein bekannten Methoden eingesetzt werden. Beispielsweise kann die thermische Reduktion der flüchtigen Bestandteile mittels Dünnschichtverdampfung, Kurzwegverdampfung oder Fallfimverdampfung erreicht werden, wobei dies bevorzugt unter vermindertem Druck (Vakuum) erfolgt. Daneben können auch klassische Destillationsverfahren zum Einsatz kommen, bei denen das Polyethercarbonatpolyol z.B. in einem Kolben oder Rührkessel auf eine Temperatur von 80 bis 200°C erhitzt wird, und die leicht flüchtigen Bestandteile über Kopf abdestilliert werden. Zur Steigerung der Effizienz der Destillation kann dabei sowohl unter vermindertem Druck und/oder Einsatz eines inerten Strippgases (z.B. Stickstoff) und/oder Einsatz eines Schleppmittels (z.B. Wasser oder inertes organisches Lösungsmittel) gearbeitet werden. Daneben kann die Reduktion der flüchtigen Bestandteile auch durch Vakuum-Strippen in einer Packungskolonne erfolgen, wobei als Strippgas üblicherweise Wasserdampf oder Stickstoff zum Einsatz kommen.

Neben den bevorzugt eingesetzten DMC-Katalysatoren auf Basis von Zinkhexacyanocobaltat ($Zn_3[Co(CN)_6]_2$) können für das erfindungsgemäße Verfahren auch andere dem Fachmann aus dem Stand der Technik für die Copolymerisation von Epoxiden und Kohlendioxid bekannte Metallkomplexkatalysatoren auf Basis der Metalle Zink und/oder Cobalt eingesetzt werden. Dies beinhaltet insbesondere sogenannte Zink-Glutarat-Katalysatoren (beschrieben z.B. in M. H. Chisholm et al., Macromolecules 2002, 35, 6494), sogenannte Zink-Diiminat-Katalysatoren (beschrieben z.B. in S. D. Allen, J. Am. Chem. Soc. 2002, 124, 14284) und sogenannte Cobalt-Salen-Katalysatoren (beschrieben z.B. in US 7,304,172 B2, US 2012/0165549 A1).

Ein weiterer Gegenstand der vorliegenden Erfindung ist ein Polyethercarbonatpolyol erhältlich nach dem erfindungsgemäßen Verfahren.
Die OH-Zahlen der erhaltenen Polyethercarbonatpolyole weisen bevorzugt Werte von 3 mg KOH/g bis 400 mg KOH/g, besonders bevorzugt von 10 mg KOH/g bis 200 mg KOH/g, ganz besonders bevorzugt von 20 mg KOH/g bis 150 mg KOH/g, auf.

Unter Äquivalentmolmasse ist die durch die Zahl der aktiven Wasserstoffatome geteilte Gesamtmasse des aktive Wasserstoffatome enthaltenden Materials zu verstehen. Im Falle von hydroxygruppenhaltigen Materialien steht sie in folgender Beziehung zur OH-Zahl:

$$\text{Äquivalentmolmasse} = 56100 / \text{OH-Zahl [mg KOH/g]}$$

Den nach dem erfindungsgemäßen Verfahren erhältlichen Polyethercarbonatpolyolen können gegebenenfalls Alterungsschutzmittel wie z. B. Antioxidantien zugesetzt werden.

Die vorliegende Erfindung betrifft ferner die Verwendung eines erfindungsgemäßen Polyethercarbonatpolyols zur Herstellung eines Polyurethanpolymers, bevorzugt eines Polyurethan-Weichschaumstoffs, besonders bevorzugt eines Polyurethan-Weichblockschaumstoffs oder eines Polyurethan-Weichformschaumstoffs.

Ein weiterer Gegenstand der Erfindung ist ein Polyurethanpolymer, bevorzugt ein Polyurethan-Weichschaumstoff, besonders bevorzugt ein Polyurethan-Weichblockschaumstoff oder ein Polyurethan-Weichformschaumstoff, erhältlich durch Umsetzung eines Polyisocyanats mit einem erfindungsgemäßen Polyethercarbonatpolyol nach einem dem Fachmann geläufigen Verfahren unter Zuhilfenahme üblicher Additive wie beispielsweise Aktivatoren, Stabilisatoren, Treibmittel, Vernetzer, Kettenverlängerer und/oder Füllstoffen sowie ggf. weiterer Polyetherpolyole, Polyesterpolyole, Polyethercarbonatpolyole, Polycarbonatpolyole und/oder füllstoffhaltiger Polyole (Polymerpolyole, Polyharnstoffdispersionen etc.).
Geeignete Polyisocyanate sind aliphatische, cycloaliphatische, araliphatische, aromatische und heterocyclische Polyisocyanate, wie sie z.B. von W. Siefken in Justus Liebigs Annalen der Chemie, 562, Seiten 75 bis 136 beschrieben werden, beispielsweise solche der Formel (XI),

$$Q(NCO)_n, \qquad (XI)$$

in der

n = 2 - 4, vorzugsweise 2 -3,
und
Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen bedeuten.

Beispielsweise handelt es sich um solche Polyisocyanate, wie sie in der EP 0 007 502 A1, Seiten 7 - 8, beschrieben werden. Bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Die urethangruppenhaltigen Polyisocyanate (Präpolymere) können beispielsweise Reaktionsprodukte der Polyisocyanate mit Polyester-Polyolen oder aber beliebigen anderen Polyolen (beispielsweise konventionellen Polyetherpolyolen) sein. Vorzugsweise wird als Polyisocyanat mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI") eingesetzt, besonders bevorzugt wird als Polyisocyanat eine Mischung enthaltend 4,4'-Diphenylmethandiisocyanat und 2,4'-Diphenylmethandiisocyanat und Polyphenylpolymethylenpolyisocyanat eingesetzt.

Neben den vorgenannten Polyisocyanaten können für die Herstellung der Polyurethanpolymere, bevorzugt der Polyurethan-Weichschaumstoffe, besonders bevorzugt der Polyurethan-Weichblockschaumstoffe oder der Polyurethan-Weichformschaumstoffe, zusätzlich noch konventionelle Polyetherpolyole verwendet werden. Unter konventionellen Polyetherpolyolen im Sinne der Erfindung sind Verbindungen zu verstehen, die Alkylenoxidadditionsprodukte von Starterverbindungen mit Zerewitinoff-aktiven Wasserstoffatomen sind. Beispiele für solche Polyetherpolyole sind dem Fachmann bekannt. Sie können eine Hydroxylzahl gemäß DIN 53240 von $\geq$ 3,0 mg KOH/g bis $\leq$ 1000 mg KOH/g, vorzugweise von $\geq$ 5,0 mg KOH/g bis $\leq$ 600 mg KOH/g aufweisen. Die für die Herstellung der konventionellen Polyetherpolyole eingesetzten Starterverbindungen mit Zerewitinoff-aktiven Wasserstoffatomen weisen meist Funktionalitäten von 2 bis 8 auf. Die Starterverbindungen können hydroxyfunktionell und / oder aminofunktionell sein. Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff. Beispiele für aminofunktionelle Starterverbindungen sind Ammoniak, Ethanolamin, Diethanolamin, Triethanolamin, Isopropanolamin, Diisopropanolamin, Ethylendiamin, Hexamethylendiamin, Anilin, die Isomere des Toluidins, die Isomere des Diaminotoluols, die Isomere des Diaminodiphenylmethans und bei der Kondensation von Anilin mit Formaldehyd zu Diaminodiphenylmethan anfallende höherkernige Produkte.

Geeignete Alkylenoxide für die konventionellen Polyetherpolyole sind beispielsweise Ethylenoxid, Propylenoxid, 1,2-Butylenoxid bzw. 2,3-Butylenoxid und Styroloxid. Bevorzugt werden Propylenoxid und Ethylenoxid dem Reaktionsgemisch einzeln, im Gemisch oder nacheinander zugeführt. Werden die Alkylenoxide nacheinander dosiert, so

enthalten die hergestellten Produkte Polyetherketten mit Blockstrukturen. Produkte mit Ethylenoxidendblöcken sind beispielsweise durch erhöhte Konzentrationen an primären Endgruppen gekennzeichnet, welche den Systemen eine vorteilhafte Isocyanatreaktivität verleihen.

Die Herstellung der konventionellen Polyetherpolyole kann basenkatalysiert, beispielsweise über Alkalimetallhydroxid- oder Aminkatalyse, doppelmetallcyanidkatalysiert oder Lewis- bzw. Brønsted-säurekatalysiert erfolgen.

Neben den vorgenannten konventionellen Polyetherpolyolen können für die Herstellung der Polyurethanpolymere, bevorzugt der Polyurethan-Weichschaumstoffe, besonders bevorzugt der Polyurethan-Weichblockschaumstoffe oder der Polyurethan-Weichformschaumstoffe, zusätzlich oder alternativ auch Polyesterpolyole verwendet werden. Geeignete Polyesterpolyole weisen vorzugsweise OH-Zahlen im Bereich von 6 bis 800 mg KOH/g auf und können beispielsweise aus mehrfunktionellen Carbonsäuren, vorzugsweise organischen Dicarbonsäuren mit 2 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen nach bekannten Verfahren hergestellt werden. Anstelle der mehrfunktionellen Carbonsäuren können auch deren Derivate, wie z. B. Säurechloride oder -anhydride eingesetzt werden.

Beispiele:

Messmethoden:

Experimentell ermittelte OH-Zahlen wurden gemäß der Vorschrift der DIN 53240 bestimmt.
Die Aminzahlen (NH-Zahl) wurden gemäß der Vorschrift der DIN 53176 ermittelt.
Die Viskositäten wurden mittels Rotationsviskosimeter (Physica MCR 51, Hersteller: Anton Paar) nach der Vorschrift der DIN 53018 ermittelt.

Der Anteil an eingebautem $CO_2$ im resultierenden Polyethercarbonatpolyol ($CO_2$-Gehalt) sowie das Verhältnis von Propylencarbonat zu Polyethercarbonatpolyol wurden mittels $^1$H-NMR (Firma Bruker, DPX 400, 400 MHz; Pulsprogramm zg30, Wartezeit d1: 10s, 64 Scans) bestimmt. Die Probe wurde jeweils in deuteriertem Chloroform gelöst. Die relevanten Resonanzen im $^1$H-NMR (bezogen auf TMS = 0 ppm) sind wie folgt:

cyclisches Carbonat (welches als Nebenprodukt gebildet wurde) Resonanz bei 4,5 ppm, Carbonat, resultierend aus im Polyethercarbonatpolyol eingebautem Kohlendioxid (Resonanzen bei 5,1 bis 4,8 ppm), nicht abreagiertes PO mit Resonanz bei 2,4 ppm, Polyetherpolyol (d.h. ohne eingebautem Kohlendioxid) mit Resonanzen bei 1,2 bis 1,0 ppm.

Der Molenanteil des im Polymer eingebauten Carbonats in der Reaktionsmischung wird nach Formel (XIV) wie folgt berechnet, wobei folgende Abkürzungen verwendet werden:

F(4,5) = Fläche der Resonanz bei 4,5 ppm für cyclisches Carbonat (entspricht einem H Atom)
F(5,1-4,8) = Fläche der Resonanz bei 5,1-4,8 ppm für Polyethercarbonatpolyol und einem H-Atom für cyclisches Carbonat.
F(2,4) = Fläche der Resonanz bei 2,4 ppm für freies, nicht abreagiertes PO
F(1,2-1,0) = Fläche der Resonanz bei 1,2-1,0 ppm für Polyetherpolyol

Unter Berücksichtigung der relativen Intensitäten wurde gemäß der folgenden Formel (XII) für das polymer gebundene Carbonat ("lineares Carbonat" LC) in der Reaktionsmischung in mol% umgerechnet:

$$LC = \frac{F(5{,}1-4{,}8) - F(4{,}5)}{F(5{,}1-4{,}8) + F(2{,}4) + 0{,}33 * F(1{,}2-1{,}0)} * 100 \qquad \text{(XII)}$$

Der Gewichtsanteil (in Gew.-%) polymer-gebundenen Carbonats (LC') in der Reaktionsmischung wurde nach Formel (IX) berechnet,

$$LC' = \frac{[F(5{,}1-4{,}8) - F(4{,}5)] * 102}{N} * 100\% \qquad \text{(XIII)}$$

wobei sich der Wert für N ("Nenner" N) nach Formel (XIV) berechnet:

$$N = [F(5,1-4,8) - F(4,5)] * 102 + F(4,5) * 102 + F(2,4) * 58 + 0,33 * F(1,2-1,0) * 58 \quad \text{(XIV)}$$

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid.
Der Gewichtsanteil (in Gew.-%) an cyclischem Carbonat (CC') in der Reaktionsmischung wurde nach Formel (XI) berechnet,

$$CC' = \frac{F(4,5) * 102}{N} * 100\% \quad \text{(XV)}$$

wobei sich der Wert für N nach Formel (XIV) berechnet.

Um aus den Werten der Zusammensetzung der Reaktionsmischung die Zusammensetzung bezogen auf den Polymer-Anteil (bestehend aus Polyether, welcher aus Propylenoxid während der unter $CO_2$-freien Bedingungen stattfindenden Aktivierungsschritten aufgebaut wurde, und Polyethercarbonatpolyol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F=44/(44+58) umgerechnet. Die Angabe des $CO_2$-Gehalts im Polyethercarbonatpolyol ("eingebautes $CO_2$"; siehe nachfolgende Beispiele und Tabelle 1) ist normiert auf das Polyethercarbonatpolyol-Molekül, das bei der Copolymerisation und den Aktivierungsschritten entstanden ist.
Die Menge an gebildeten cyclischen Propylencarbonat wird über die Bilanzierung der in der Reaktionsmischung vorhandenen Gesamtmenge an cyclischem Propylencarbonat und der als Vorlage eingesetzten Menge an Propylencarbonat bestimmt.

Die Bestimmung der Funktionalität des Starters im fertigen Polyethercarbonatpolyol wurde mittels $^{13}C$-NMR (Firma Bruker, Advance 400, 400 MHz; Wartezeit d1: 4s, 6000 Scans) durchgeführt. Die Probe wurde jeweils in deuteriertem Aceton-D6 unter Zusatz von Crom(III)acetylacetonat gelöst. Die Lösungskonzentration lag bei 500 mg / mL.
Die relevanten Resonanzen im $^{13}C$-NMR (bezogen auf $CHCl_3$ = 7,24 ppm) sind wie folgt: Ausgewertet werden die Kohlenstoffsignale der unmittelbar am Stickstoff gebundenen C-Atome (Methylengruppen, Methingruppe) des Starters:

| | |
|---|---|
| Bifunktionell gestartet: | 40,4 ppm bis 40,0 ppm (ein Kohlenstoff) |
| Trifunktionell gestartet: | 42,2 ppm bis 40,5 ppm (zwei Kohlenstoffe) |

Bifunktionell gestartet bedeutet, dass nur die OH-Gruppen der Urethan-Alkohol Starterverbindung alkoxyliert werden.
Trifunktionell gestartet bedeutet, dass die OH-Gruppen sowie die NH-Gruppe der Urethanbindung der Urethan-Alkohol Starterverbindung alkoxyliert werden.

Die chemische Verschiebungen im $^{13}C$-NMR wurden mit Vergleichsmessungen (Vergleichsspektren) ermittelt.

Die Rohdichten wurde gemäß DIN EN ISO 845 ermittelt.
Die Stauchhärten (40% Kompression) gemäß DIN EN ISO 1798 ermittelt.

**<u>Eingesetzte Rohstoffe:</u>**

Katalysator für die Herstellung der Polyethercarbonatpolyole (DMC-Katalysator): Doppelmetallcyanid-Katalysator, enthaltend Zinkhexacyanocobaltat, tert.-Butanol und Polypropylenglykol mit einem zahlenmittleren Molekulargewicht von 1000 g/mol; gemäß Beispiel 6 in WO-A 01/80994.

Cyclisches Propylencarbonat (cPC): Fa. Acros, Art.Nr.: 131560025
Cyclisches Ethylencarbonat (cEC): Fa. Acros, Art.Nr.: 118410010
Ethanolamin: Fa. Merck; Art-Nr: 800849
Stabilisator 1: Siloxan-basierter Schaumstabilisator Tegostab® BF 2370, Evonik Goldschmidt
Isocyanat 1: Gemisch aus 80 Gewichts-% 2,4- und 20 Gewichts-% 2,6-Toluylendiisocyanat, erhältlich unter dem Namen Desmodur® T 80, Bayer MaterialScience AG

Katalysator 1: Bis-(2-dimethylamino-ethyl)-ether in Dipropylenglykol, erhältlich als Addocat® 108, Fa. Rheinchemie
Katalysator 2: Zinn(II)-ethylhexanoat, erhältlich als Dabco® T-9, Fa. Air Products

**Herstellung von Urethan-Alkoholen:**

**Beispiel 1a:**

In einem 10-L-Vierhalskolben mit Rückflusskühler und Thermometer wurde cyclisches Propylencarbonat (6080 g, 59,6 mol) vorgelegt. Anschließend wurde bei 60°C Ethanolamin (2405 g, 39,6 mol) langsam innerhalb 50 min so zugetropft, dass die Temperatur 72°C nicht überschritt. Das Reaktionsgemisch wurde anschließend für 24 h bei 60°C gerührt. Nach Abkühlen auf 25°C wurde der Urethan-Alkohol erhalten.

Eigenschaften des resultierenden Urethan-Alkohols:

| | |
|---|---|
| OH-Zahl: | 507 mg KOH/g |
| NH-Zahl: | 0,51 mg KOH/g |
| Viskosität (25°C): | 268 mPas |

**Beispiel 1b:**

1000 g Urethan-Alkohol, hergestellt gemäß Beispiel 1a, wurde mittels Dünnschichtverdampfung (0,1 mbar, 120 °C) von flüchtigen Bestandteilen befreit.

Es resultierte ein Urethan-Alkohol mit folgenden Eigenschaften:

| | |
|---|---|
| OH-Zahl: | 671 mg KOH/g |
| NH-Zahl: | 0,20 mg KOH/g |
| Viskosität (25°C): | 3170 mPas |

**Beispiel 2:**

In einem 2-L-Vierhalskolben mit Rückflusskühler und Thermometer wurde ein Gemisch aus cyclischem Propylencarbonat (1181 g, 11,6 mol) und auf 50°C erwärmtem cyclischem Ethylencarbonat (62 g, 0,7 mol) vorgelegt. Anschließend wurde bei 60°C Ethanolamin (500 g, 8,2 mol) langsam innerhalb 60 min so zu getropft, dass die Temperatur 70°C nicht überschritt. Die Reaktion wurde anschließend für 15 h bei 60°C gerührt. Nach Abkühlen auf 25°C wurde der Urethan-Alkohol erhalten

Eigenschaften des resultierenden Urethan-Alkohols:

| | |
|---|---|
| OH-Zahl: | 523 mg KOH/g |
| NH-Zahl: | 0,20 mg KOH/g |
| Viskosität (25°C): | 313 mPas |

**Beispiel 3 (LAEM 528):**

In einem 2-L-Vierhalskolben mit Rückflusskühler und Thermometer wurde ein Gemisch aus cyclischem Propylencarbonat (1110 g, 10,9 mol) und auf 50 °C erwärmtem cyclischem Ethylencarbonat (123 g, 1,4 mol) vorgelegt. Anschließend wurde bei 60°C Ethanolamin (500 g, 8,2 mol) langsam innerhalb 60 min so zu getropft, dass die Temperatur 79°C nicht überschritt. Die Reaktion wurde anschließend für 15 h bei 60°C gerührt. Nach Abkühlen auf 25°C wurde der Urethan-Alkohol erhalten

Eigenschaften des resultierenden Urethan-Alkohols:

| | |
|---|---|
| OH-Zahl: | 527 mg KOH/g |
| NH-Zahl: | 0,30 mg KOH/g |
| Viskosität (25°C): | 295 mPas |

**Herstellung von Polyethercarbonatpolyolen**

**Beispiel 4: Copolymerisation von PO und $CO_2$ mit kontinuierlicher Dosierung der Urethan-Alkohol Starterverbindung**

Schritt (α) ("Trocknung"):

107 mg getrockneter DMC-Katalysator, der nicht aktiviert ist, wurden in 31 g 4-Methyl-2-oxo-1,3-dioxolan (im Folgenden auch als cyclisches Propylencarbonat oder cPC bezeichnet) suspendiert und die Suspension anschließend in einen 1L Druckreaktor mit Gasdosierungseinrichtung gefüllt. Die Suspension wurde dann auf 130 °C aufgeheizt und über 30 min wurde mit 26 - 30 L/h Stickstoff eingeleitet und gleichzeitig ein reduzierter Druck von 75-100 mbar angelegt.

Schritt (β) ("Katalysatoraktivierung"):

In dem Reaktor wurden bei 130 °C, 1200 U/min und bei einem Vordruck von rund 100 mbar, der mit Stickstoff eingestellt wurde, eine Menge von 5 g Propylenoxid (PO) auf einmal zugegeben. Das Anspringen der Reaktion machte sich durch eine Temperaturspitze ("Hotspot") und durch einen Druckabfall auf den Ausgangsdruck bemerkbar. Nach dem ersten Druckabfall wurde der Reaktor mit p = 50 bar $CO_2$ beaufschlagt und anschließend wurden zur Aktivierung weitere 10 g PO auf einmal zugegeben. Nach einer Wartezeit kam es erneut zu einer Temperaturspitze und der Gesamtdruck im Reaktor zeigte eine Druckabnahme.

Schritt (γ) ("Copolymerisation von PO und $CO_2$ mit kontinuierlicher Dosierung der Urethan-Alkohol Starterverbindung"):

Nach der erfolgten Aktivierung wurden Propylenoxid (196 g) mit 1,00 g/min und 18 g des Urethan-Alkohols aus Beispiel 1b mit 0,104 g/min simultan in den Reaktor eindosiert. Gleichzeitig wurde die Reaktionstemperatur von 130 °C mit 1 °C/min auf 105 °C gesenkt. Der Fortschritt der Reaktion wurde an dem $CO_2$-Verbrauch beobachtet, wobei durch kontinuierliche geregelte Nachdosierung der Druck im Reaktor bei 50 bar $CO_2$ konstant gehalten wurde. Nach beendeter PO-Zugabe wurde bei 105 °C und Reaktionsdruck bis zum Versiegen des $CO_2$-Verbrauchs nachgerührt (1200 U/min). Diese Nachreaktion dauerte ca. 3 h.

Das erhaltene Produktgemisch wurde mittels Rotationsverdampfer von Spuren monomerem Propylenoxid befreit und durch die Zugabe von 500 ppm Irganox 1076 stabilisiert. Anschließend wurde das cyclische Propylencarbonat mittels Dünnschichtverdampfung (0,1 mbar, 120 °C) aus der Reaktionsmischung abgetrennt. Der im Polyethercarbonatpolyol eingebaute $CO_2$-Anteil, die Viskosität, OH-Zahl und die Funktionalität wurden mit den oben genannten analytischen Methoden bestimmt.

| Eigenschaften des resultierenden Polyethercarbonatpolyols: | |
|---|---|
| OH-Zahl: | 58,7 mg KOH/g |
| Viskosität (25°C): | 4640 mPas |
| $CO_2$-Gehalt: | 15,0% |
| Funktionalität: | 2,74 |

**Beispiel 5: Copolymerisation von PO und $CO_2$ mit kontinuierlicher Dosierung der Urethan-Alkohol Starterverbindung**

Schritt (α) ("Trocknung"):

107 mg getrockneter DMC-Katalysator, der nicht aktiviert ist, wurden in 31 g cPC suspendiert und die Suspension anschließend in einen 1L Druckreaktor mit Gasdosierungseinrichtung gefüllt. Die Suspension wurde dann auf 130 °C aufgeheizt und über 30 min wurde mit 26 - 30 L/h Stickstoff eingeleitet und gleichzeitig ein reduzierter Druck von 75-100 mbar angelegt. Schritt (β) ("Katalysatoraktivierung"):

In dem Reaktor wurden bei 130 °C, 1200 U/min und bei einem Vordruck von rund 100 mbar, der mit Stickstoff eingestellt wurde, eine Menge von 5 g Propylenoxid (PO) auf einmal zugegeben. Das Anspringen der Reaktion machte sich durch eine Temperaturspitze ("Hotspot") und durch einen Druckabfall auf den Ausgangsdruck bemerkbar. Nach dem ersten Druckabfall wurde der Reaktor mit p = 50 bar $CO_2$ beaufschlagt und anschließend wurden

zur Aktivierung weitere 10 g PO auf einmal zugegeben. Nach einer Wartezeit kam es erneut zu einer Temperaturspitze und der Gesamtdruck im Reaktor zeigte eine Druckabnahme.

Schritt (γ) ("Copolymerisation von PO und $CO_2$ mit kontinuierlicher Dosierung der Urethan-Alkohol Starterverbindung"):

Nach der erfolgten Aktivierung wurden Propylenoxid (196 g) mit 1,01 g/min und 18 g des Urethan-Alkohols aus Beispiel 2 mit 0,100 g/min simultan in den Reaktor eindosiert. Gleichzeitig wurde die Reaktionstemperatur von 130 °C mit 1 °C/min auf 105 °C gesenkt. Der Fortschritt der Reaktion wurde an dem $CO_2$-Verbrauch beobachtet, wobei durch kontinuierliche geregelte Nachdosierung der Druck im Reaktor bei 50 bar $CO_2$ konstant gehalten wurde. Nach beendeter PO-Zugabe wurde bei 105 °C und Reaktionsdruck bis zum Versiegen des $CO_2$-Verbrauchs nachgerührt (1200 U/min). Diese Nachreaktion dauerte ca. 3 h.

Das erhaltene Produktgemisch wurde mittels Rotationsverdampfer von Spuren monomerem PO befreit und durch die Zugabe von 500 ppm Irganox 1076 stabilisiert. Anschließend wurde das cyclische Propylencarbonat mittels Dünnschichtverdampfung (0,1 mbar, 120 °C) aus der Reaktionsmischung abgetrennt. Der im Polyethercarbonatpolyol eingebaute $CO_2$-Anteil, die Viskosität und die OH-Zahl wurden mit den oben genannten analytischen Methoden bestimmt.

| Eigenschaften des resultierenden Polyethercarbonatpolyols: | |
|---|---|
| OH-Zahl: | 50,7 mg KOH/g |
| Viskosität (25°C): | 7370 mPas |
| $CO_2$-Gehalt: | 16,6% |

**Beispiel 6: Copolymerisation von PO und $CO_2$ mit kontinuierlicher Dosierung der Urethan-Alkohol Starterverbindung**

Schritt (α) ("Trocknung"):

107 mg getrockneter DMC-Katalysator, der nicht aktiviert ist, wurden in 31 g cPC suspendiert und die Suspension anschließend in einen 1L Druckreaktor mit Gasdosierungseinrichtung gefüllt. Die Suspension wurde dann auf 130 °C aufgeheizt und über 30 min wurde mit 26 - 30 L/h Stickstoff eingeleitet und gleichzeitig ein reduzierter Druck von 75-100 mbar angelegt. Schritt (β) ("Katalysatoraktivierung"):

In dem Reaktor wurden bei 130 °C, 1200 U/min und bei einem Vordruck von rund 100 mbar, der mit Stickstoff eingestellt wurde, eine Menge von 5 g Propylenoxid (PO) auf einmal zugegeben. Das Anspringen der Reaktion machte sich durch eine Temperaturspitze ("Hotspot") und durch einen Druckabfall auf den Ausgangsdruck bemerkbar. Nach dem ersten Druckabfall wurde der Reaktor mit p = 50 bar $CO_2$ beaufschlagt und anschließend wurden zur Aktivierung weitere 10 g PO auf einmal zugegeben. Nach einer Wartezeit kam es erneut zu einer Temperaturspitze und der Gesamtdruck im Reaktor zeigte eine Druckabnahme.

Schritt (γ) ("Copolymerisation von PO und $CO_2$ mit kontinuierlicher Dosierung der Urethan-Alkohol Starterverbindung"):

Nach der erfolgten Aktivierung wurden Propylenoxid (196 g) mit 1,00 g/min und 18 g des Urethan-Alkohols aus Beispiel 3 mit 0,100 g/min simultan in den Reaktor eindosiert. Gleichzeitig wurde die Reaktionstemperatur von 130 °C mit 1 °C/min auf 105 °C gesenkt. Der Fortschritt der Reaktion wurde an dem $CO_2$-Verbrauch beobachtet, wobei durch kontinuierliche geregelte Nachdosierung der Druck im Reaktor bei 50 bar $CO_2$ konstant gehalten wurde. Nach beendeter PO-Zugabe wurde bei 105 °C und Reaktionsdruck bis zum Versiegen des $CO_2$-Verbrauchs nachgerührt (1200 U/min). Diese Nachreaktion dauerte ca. 3 h.

Das erhaltene Produktgemisch wurde mittels Rotationsverdampfer von Spuren monomerem PO befreit und durch die Zugabe von 500 ppm Irganox 1076 stabilisiert. Anschließend wurde das cyclische Propylencarbonat mittels Dünnschichtverdampfung (0,1 mbar, 120 °C) aus der Reaktionsmischung abgetrennt. Der im Polyethercarbonatpolyol eingebaute $CO_2$-Anteil, die Viskosität und die OH-Zahl wurden mit den oben genannten analytischen Methoden bestimmt.
Eigenschaften des resultierenden Polyethercarbonatpolyols:

| | |
|---|---|
| OH-Zahl: | 58,7 mg KOH/g |
| Viskosität (25°C): | 4640 mPas |
| $CO_2$-Gehalt: | 15,0% |

**Beispiel 7: Kontinuierliches Verfahren mit kontinuierlicher Dosierung der Urethan-Alkohol Starterverbindung**

Die Reaktion wurde in einer kontinuierlich betriebenen Rührkesselkaskade bestehend aus fünf hintereinandergeschalteten Druckbehältern (Reaktor R1, Reaktor R2, Reaktor R3, Reaktor R4 und Reaktor R5) durchgeführt.

R1, R2, R3, R4 und R5 sind jeweils Reaktoren kontinuierlich gerührte Rührreaktoren: Reaktor R1 (300 ml Volumen) hatte eine Höhe (innen) von 10,16 cm und einen Innendurchmesser von 6,35 cm. Der Reaktor war ausgestattet mit einem elektrischen Heizmantel (510 Watt maximale Heizleistung). Die Gegenkühlung bestand in einem U-förmig gebogenen Tauchrohr mit 3,17 mm Außendurchmesser, das bis 5 mm über den Boden in den Reaktor ragte und das mit Kühlwasser von ca. 10°C durchströmt wurde. Der Wasserstrom wurde über ein Magnetventil ein- und ausgeschaltet. Weiterhin war der Reaktor mit einem Einleitrohr für Inertgas (Stickstoff) einem Einleitrohr für Propylenoxid, sowie einem Thermofühler mit 3,17 mm Durchmesser ausgestattet, die bis 3 mm über den Boden in den Reaktor ragten. Weiterhin war der Reaktor mit einem Einleitrohr für Inertgas oder Kohlendioxid sowie einem Anschluss für Vakuum ausgestattet, die in die Gasphase des Reaktors führten. Der Reaktor wurde über einen Schrägblattrührer gerührt, der vier Rührflügel (45°) mit jeweils einem Durchmesser von 35 mm und einer Höhe von 10 mm aufwies. Über einen Massenflussregler wurde die flüssige Phase in den Reaktor R2 dosiert.

Reaktor R2 (300 ml Volumen) hatte eine Höhe (innen) von 10,16 cm und einen Innendurchmesser von 6,35 cm. Der Reaktor war ausgestattet mit einem elektrischen Heizmantel (510 Watt maximale Heizleistung). Die Gegenkühlung bestand in einem spiralförmig gebogenen Rohr mit 3,17 mm Außendurchmesser, das mit Kühlwasser von ca. 10°C durchströmt wurde. Der Wasserstrom wurde über ein Magnetventil ein- und ausgeschaltet. Weiterhin war der Reaktor mit einem Einleitrohr für Inertgas (Stickstoff), einem Einleitrohr für Propylenoxid, sowie einem Thermofühler mit 3,17 mm Durchmesser ausgestattet, die in den Reaktor ragten. Weiterhin war der Reaktor mit einem Einleitrohr für Inertgas oder Kohlendioxid sowie einem Anschluss für Vakuum ausgestattet, die in die Gasphase des Reaktors führten. Der Reaktor wurde über einen Schrägblattrührer gerührt, der sich in der Mitte eines Strömungsleitbleches mit Strömungsbrecher befand. Bei dem Schrägblattrührer handelte es sich um einen Rührer mit vier Rührflügeln (45°), die einen Durchmesser von 35 mm und eine Höhe von 10 mm aufwiesen. Weiterhin verfügte der Reaktor über ein Schauglas. Über ein beheiztes Rohr wurde der Überlauf in den Reaktor R3 geführt.

Reaktor R3 (300 ml Volumen) hatte eine Höhe (innen) von 10,16 cm und einen Innendurchmesser von 6,35 cm. Der Reaktor war ausgestattet mit einem elektrischen Heizmantel (510 Watt maximale Heizleistung). Die Gegenkühlung bestand in einem spiralförmig gebogenen Rohr mit 3,17 mm Außendurchmesser, das mit Kühlwasser von ca. 10°C durchströmt wurde. Der Wasserstrom wurde über ein Magnetventil ein- und ausgeschaltet. Weiterhin war der Reaktor mit einem Einleitrohr für das Reaktionsgemisch aus Reaktor R2 und einem Thermofühler mit 3,17 mm Durchmesser ausgestattet. Über ein beheiztes Rohr wurde der Überlauf in den Reaktor R4 geführt.

Reaktor R4 war baugleich zu Reaktor R3. Der Überlauf wurde durch ein beheiztes Rohr in Reaktor R5 geführt.

Reaktor R5 (1700 ml Volumen) hatte eine Höhe (innen) von 28,5 cm und einen Innendurchmesser von 9,82 cm. Der Reaktor war ausgestattet mit einem elektrischen Heizmantel (510 Watt maximale Heizleistung). Die Gegenkühlung bestand in einem wellenförmig gebogenen Tauchrohr mit 6,35 mm Außendurchmesser, das bis 5 mm über den Boden in den Reaktor ragte und das mit Kühlwasser von ca. 10°C durchströmt wurde. Der Wasserstrom wurde über ein Magnetventil ein- und ausgeschaltet. Weiterhin war der Reaktor mit einem Thermofühler mit 3,17 mm Durchmesser ausgestattet, das bis 3 mm über den Boden in den Reaktor ragte. Der Reaktor wurde über einen Spiralrührer gerührt, bei dem auf der Rührwelle ein spiralförmig ausgebildeter viereckiger Metallstab mit einem Querschnitt von 12,4 x 45 mm angebracht war, wobei die Spirale einen Außendurchmesser von 6 cm, einen Innendurchmesser von 4,6 cm und eine Höhe von 14 cm aufwies. Über einen Druckhalteventil wurde die Gasphase in die Abluft abgeführt.

Für die Aufnahme der Propylenoxid-Konzentration während der Katalysatoraktivierung in Reaktor R2 wurde ein Bruker MATRIX-MF Spektrometer ausgestattet mit 3,17 mm ATR-IR Faseroptik-Sonden verwendet. Die ATR-IR Faseroptik-Sonden (90° Diamant-Prisma mit 1 x 2mm Grundfläche und 1 mm Höhe als ATR Element, 2 x 45° Reflektion des IR Strahls, IR Strahl über Lichtleitfaser eingekoppelt) wurden so in den Reaktoren eingebaut, dass der am Ende der 3,17 mm ATR Faseroptik-Sonde befindliche Diamant vollständig in die Reaktionsmischung eintauchte. IR Spektren (Mittelwert von 100 Scans) wurden alle 60 Sekunden im Bereich 4000-650 $cm^{-1}$ mit einer Auflösung von 4 $cm^{-1}$ aufgenommen. Die Propylenoxid-Konzentration wurde über Aufnahme der charakteristischen Bande für Propylenoxid bei 830 $cm^{-1}$ verfolgt. Eine Abnahme der Intensität der Bande bei 830 $cm^{-1}$ auf 5% des Maximalwertes wurde als vollständiger Umsatz von Propylenoxid gewertet.

Für die Entfernung der leicht flüchtigen Bestandteile wurde die Reaktionsmischung durch einen Fallfilmverdampfer geleitet. Die Lösung (0,1 kg in 1 h) lief entlang der inneren Wand eines von außen auf 120°C beheizten Rohres mit 70 mm Durchmesser und 200 mm Länge herab, wobei die Reaktionsmischung durch drei mit einer Geschwindigkeit von 250 U/min rotierende Rollen mit 10 mm Durchmesser jeweils gleichmäßig als dünner Film auf der inneren Wand des Fallfilmverdampfers verteilt wurde. Im Inneren des Rohres wurde über eine Pumpe ein Druck von <1 mbar eingestellt. Die von leicht flüchtigen Bestandteilen (z.B. nicht umgesetztes Propylenoxid, cyclisches Propylencarbonat) gereinigte Reaktionsmischung wurde am unteren Ende des beheizten Rohres in einer Vorlage aufgefangen.

Prozessschritte:

*Herstellung einer Mischung aus DMC-Katalysator und Urethan-Alkohol Starterverbindung:*

In einem 300 ml Druckreaktor (Reaktor R1) ausgestattet mit Schrägblattrührer wurde eine Mischung aus DMC-Katalysator (0,645 g) und Urethan-Alkohol aus Beispiel 1a (250,00 g) vorgelegt. Der Reaktor wurde geschlossen und die Mischung aus DMC-Katalysator und Starter in Reaktor R1 bei 40 °C über Nacht mit 300 U/min und 1 bar gerührt. Der Druck in Reaktor R1 wurde mit Stickstoff, das in die Gasphase eingeleitet wurde, schrittweise auf 47 bar geregelt.

*Schritt (β) (Aktivierung):*

In einem 300 ml Druckreaktor (Reaktor R2) ausgestattet mit Schrägblattrührer, Strömungsbrecher und Strömungsleitblech wurde eine Mischung aus DMC-Katalysator (0,059 g) und Propylencarbonat (150,10 g) vorgelegt und bei 650 U/min gerührt. Anschließend wurde am Boden des Reaktors ein leichter Stickstoffstrom von 10 g/h bei geöffnetem Ablufthahn in die Reaktionsmischung eingestellt Die Reaktionsmischung wurde für 31 min inertisiert und der Reaktor anschließend verschlossen. Der Reaktor wurde auf 130 °C aufgeheizt. Es wurden 15 g Propylenoxid mit Hilfe eines Massenflussreglers (200 g/h) zu dosiert. Die Abnahme der Konzentration des Propylenoxids wurde über IR Spektroskopie verfolgt. Die Reaktionsmischung wurde bis zum vollständigen Umsatz des Propylenoxids (*ca.* 15 min) gerührt (650 U/min). Anschließend wurden noch zwei weitere Male 15 g Propylenoxid mit Hilfe eines Massenflussreglers (200 g/h) zu dosiert und die Reaktionsmischung jeweils bis zum vollständigen Umsatz des Propylenoxids (*ca.* 15 min) gerührt (650 U/min). Das Auftreten einer kurzzeitig erhöhten Wärmeentwicklung im Reaktor nach Zugabe des Propylenoxids bestätigte die Aktivierung des Katalysators. Anschließend wurde über einen Massendurchflussmesser und eine Mikrozahnringpumpe die Mischung aus Urethan-Alkohol und DMC-Katalysator aus Reaktor R1 (20 g/h) dosiert. Der Fluss wurde auf 7,70 g/h reguliert, sobald der Austritt des Gemisches aus Urethan-Alkohol und DMC-Katalysator am Ende der Tauchleitung durch das Schauglas sichtbar war (ca. 8 min). Weiterhin wurden über einen Massendurchflussregler und eine Tauchleitung kontinuierlich 71 g/h Propylenoxid in den Reaktor R2 dosiert.

*Schritt (y) (Copolymerisation):*

Sobald der Überlauf von Reaktor R2 (bei 195 mL Flüssigkeitsvolumen) erreicht wurde, wurde das Ventil am Auslass von Reaktor R2 geöffnet. In die Gasphase von Reaktor R2 wurde kontinuierlich $CO_2$ mit einem Fluss von 23 g/h eingeleitet. Der Auslassstrom wurde über die weiteren Druckbehälter (Reaktoren R3, R4 und R5) und ein Druckhalteventil, das auf 50 bar Vordruck eingestellt war, abgeleitet. Die Temperatur in den Reaktoren R3 und R4 wurde auf 130 °C, in Reaktor R5 auf 100 °C geregelt. Die Rührergeschwindigkeit in den Reaktoren R3 und R4 betrug 650 U/min, in Reaktor R5 200 U/min. Das Produktgemisch wurde in Reaktor R5 bei 100°C unter Druck aufgefangen und bei 200 U/min gerührt. Die Temperatur der beheizten Leitungen zwischen den Reaktoren R1 und R2 betrug 50°C, zwischen den Reaktoren R2 - R3 sowie R3 - R4 und R4 - R5 100 °C. Nach 94 Stunden Betriebsdauer wurde über ein Ventil eine Probe der flüssigen Phase aus dem Reaktor R5 entnommen. Nach Entfernung der leicht flüchtigen Bestandteile aus der Reaktionsmischung durch den Fallfilmverdampfer (siehe oben) wurde das Polyethercarbonatpolyol erhalten:

Eigenschaften des resultierenden Polyethercarbonatpolyols:

| | |
|---|---|
| OH-Zahl: | 66,3 mg KOH/g |
| Viskosität (25°C): | 1855 mPas |
| $CO_2$-Gehalt: | 10,2 % |

**Beispiele 8-11: <u>Herstellung von Polyurethan-Weichschaumstoffen:</u>**

Es wurden Polyurethan-Weichschaumstoffe gemäß den in der nachfolgenden Tabelle 1 angegebenen Rezepturen hergestellt. Aufgeführt sind die Anteile der Komponenten in Gewichts-Teilen.

Es wurden qualitativ hochwertige Polyurethan-Weichschaumstoffe mit einheitlicher Zellstruktur erhalten, die

durch Ermittlung der Rohdichten und Stauchhärten (Stauchhärte gemessen bei 40% Kompression) charakterisiert wurden (Tabelle 1).

Tabelle 1: Herstellung von Polyurethan-Weichschaumstoffen

| **Beispiel** | **8** | **9** | **10** | **11** |
|---|---|---|---|---|
| Polyethercarbonatpolyol aus Beispiel 4 [Gew.-Tle] | 100 | 100 | - | - |
| Polyethercarbonatpolyol aus Beispiel 5 [Gew.-Tle] | - | - | 100 | - |
| Polyethercarbonatpolyol aus Beispiel 6 [Gew.-Tle] | - | - | - | 100 |
| Stabilisator 1 [Gew.-Tle] | 2,4 | 1,2 | 2,4 | 2,4 |
| Katalysator 1 [Gew.-Tle] | 0,15 | 0,12 | 0,15 | 0,15 |
| Katalysator 2 [Gew.-Tle] | 0,14 | 0,18 | 0,14 | 0,14 |
| Wasser [Gew.-Tle] | 2,50 | 4,50 | 2,50 | 2,50 |
| Isocyanat 1 [Gew.-Tle] | 36,0 | 56,8 | 34,5 | 34,2 |
| NCO-Index | 108 | 108 | 108 | 108 |
| Rohdichte [kg/m$^3$] | 39,3 | 27,8 | 41,4 | 37,2 |
| Stauchhärte, 4.Zyklus [kPa] | 3,0 | 4,4 | 3,4 | 3,0 |

## Patentansprüche

**1.** Verfahren zur Herstellung von Polyethercarbonatpolyolen durch Anlagerung von Alkylenoxiden und Kohlendioxid an H-funktionelle Starterverbindungen, **dadurch gekennzeichnet, dass** mindestens ein Urethan-Alkohol gemäß Formel (II),

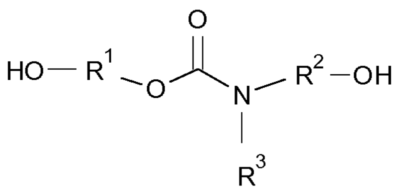

(II)

wobei

$R^1$ bedeutet lineares oder verzweigtes $C_2$ bis $C_{24}$ - Alkylen, das gegebenenfalls durch Heteroatome wie O, S oder N unterbrochen sein kann und substituiert sein kann,
$R^2$ bedeutet lineares oder verzweigtes $C_2$ bis $C_{24}$ - Alkylen, das gegebenenfalls durch Heteroatome wie O, S oder N unterbrochen sein kann und substituiert sein kann,
$R^3$ bedeutet H, lineares oder verzweigtes $C_1$ bis $C_{24}$ - Alkyl, $C_3$ bis $C_{24}$ - Cycloalkyl, $C_4$ bis $C_{24}$ - Aryl, $C_5$ bis $C_{24}$ - Aralkyl, $C_2$ bis $C_{24}$ - Alkenyl, $C_2$ bis $C_{24}$ - Alkinyl, die jeweils gegebenenfalls durch Heteroatome wie O, S oder N unterbrochen sein können und/oder jeweils mit Alkyl, Aryl und/oder Hydroxyl substituiert sein können,

als H-funktionelle Starterverbindung eingesetzt wird.

**2.** Verfahren gemäß Anspruch 1, wobei
$R^1$ = $CH_2$-$CH_2$ oder $CH_2$-$CH(CH_3)$ bedeutet,
$R^2$ = $CH_2$-$CH_2$ oder $CH_2$-$CH(CH_3)$ bedeutet, und
$R^3$ = H bedeutet.

**3.** Verfahren gemäß Anspruch 1, **dadurch gekennzeichnet, dass** der Urethan-Alkohol erhalten wird durch Umsetzung von Propylencarbonat und/oder Ethylencarbonat mit einem Alkanolamin gemäß Formel (III),

$HN(R^3)-R^2-OH$ (III)

wobei $R^2$ und $R^3$ die in Anspruch 1 genannte Bedeutung haben.

4. Verfahren gemäß Anspruch 3, **dadurch gekennzeichnet, dass** der Urethan-Alkohol erhalten wird durch Umsetzung von Propylencarbonat und/oder Ethylencarbonat mit mindestens einem Amin ausgewählt aus der Gruppe bestehend aus Ethanolamin, Diethanolamin, (N-Methyl)-Ethanolamin, Isopropanolamin, Diisopropanolamin und Propanolamin.

5. Verfahren gemäß einem der Ansprüche 1 bis 4, **dadurch gekennzeichnet, dass** als Alkylenoxid wenigstens ein Alkylenoxid ausgewählt aus der Gruppe bestehend aus Ethylenoxid und Propylenoxid eingesetzt wird.

6. Verfahren gemäß einem der Ansprüche 1 bis 5, wobei die Anlagerung in Gegenwart mindestens eines DMC-Katalysators erfolgt.

7. Verfahren gemäß einem der Ansprüche 1 bis 5, wobei die Anlagerung in Gegenwart eines Metallkomplexkatalysators auf Basis der Metalle Zink und/oder Cobalt erfolgt.

8. Verfahren gemäß einem der Ansprüche 1 bis 6, **dadurch gekennzeichnet, dass**

   (α) der Urethan-Alkohol gemäß Formel (II) oder ein Suspensionsmittel vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator dem Urethan-Alkohol gemäß Formel (II) oder dem Suspensionsmittel vor oder nach der Trocknung zugesetzt wird,
   (β) zur Aktivierung eine Teilmenge (bezogen auf die Gesamtmenge der bei der Aktivierung und Copolymerisation eingesetzten Menge an Alkylenoxiden) von Alkylenoxid zu der aus Schritt (α) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann,
   (γ) Alkylenoxid, Kohlendioxid und gegebenenfalls Urethan-Alkohol gemäß Formel (II) zu der aus Schritt (β) resultierenden Mischung zugesetzt werden,

   wobei wenigstens in einem der Schritte (α) oder (γ) mindestens ein Urethan-Alkohol gemäß Formel (II) als H-funktionelle Startersubstanz zugesetzt wird.

9. Verfahren gemäß einem der Ansprüche 1 bis 8, wobei ein oder mehrere der Urethan-Alkohole der Formel (II) als H-funktionelle Startersubstanz(en) während der Reaktion kontinuierlich in den Reaktor zudosiert werden.

10. Verfahren gemäß einem der Ansprüche 1 bis 6 und 8 bis 9, wobei ein oder mehrere Urethan-Alkohole gemäß Formel (II), ein oder mehrere Alkylenoxid(e) sowie DMC-Katalysator in Gegenwart von Kohlendioxid ("Copolymerisation") kontinuierlich in den Reaktor dosiert werden und wobei das resultierende Reaktionsgemisch (enthaltend das Reaktionsprodukt) kontinuierlich aus dem Reaktor entfernt wird.

11. Verfahren gemäß Anspruch 10, wobei in einem Schritt (δ) das kontinuierlich aus dem Reaktor entfernte Reaktionsgemisch mit einem Gehalt von 0,05 Gew.-% bis 10 Gew.-% Alkylenoxid in einen Nachreaktor überführt wird, in dem im Wege einer Nachreaktion der Gehalt an freiem Alkylenoxid auf weniger als 0,05 Gew.-% im Reaktionsgemisch reduziert wird.

12. Polyethercarbonatpolyole enthaltend eine Struktureinheit der Formel (IV),

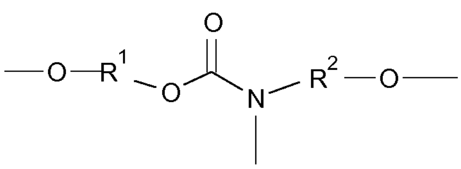

(IV)

wobei

$R^1$ = $CH_2$-$CH_2$ oder $CH_2$-$CH(CH_3)$ bedeutet,
$R^2$ = $CH_2$-$CH_2$ oder $CH_2$-$CH(CH_3)$ bedeutet,
und wobei $R^1$ und $R^2$ identisch oder voneinander verschieden sein können.

**13.** Polyethercarbonatpolyole gemäß Anspruch 12, **dadurch gekennzeichnet, dass** diese eine OH-Zahl von 3 bis 400 mg KOH /g, bevorzugt 10 bis 200 mg KOH/g aufweisen.

**14.** Polyethercarbonatpolyole erhältlich nach einem Verfahren gemäß einem der Ansprüche 1 bis 11.

**15.** Verwendung eines Polyethercarbonatpolyols gemäß einem der Ansprüche 12 bis 14 zur Herstellung eines Polyurethanpolymers, bevorzugt eines Polyurethan-Weichschaumstoffs.

**16.** Polyurethanpolymer, bevorzugt ein Polyurethan-Weichschaumstoff, erhältlich durch Umsetzung eines Polyisocyanats mit einem Polyethercarbonatpolyol gemäß einem der Ansprüche 12 bis 14.

## Claims

**1.** Process for preparing polyether carbonate polyols by addition of alkylene oxides and carbon dioxide onto H-functional starter compounds, **characterized in that** at least one urethane alcohol of formula (II)

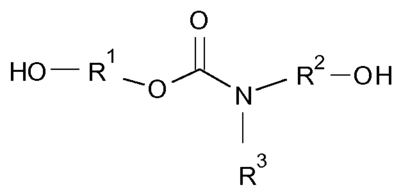

(II)

where

$R^1$ is linear or branched $C_2$- to $C_{24}$-alkylene which may optionally be interrupted by heteroatoms such as O, S or N and may be substituted,
$R^3$ is linear or branched $C_2$- to $C_{24}$-alkylene which may optionally be interrupted by heteroatoms such as O, S or N and may be substituted,
$R^3$ is H, linear or branched $C_1$- to $C_{24}$-alkyl, $C_3$- to $C_{24}$-cycloalkyl, $C_4$- to $C_{24}$-aryl, $C_5$-to $C_{24}$-aralkyl, $C_2$- to $C_{24}$-alkenyl, $C_2$- to $C_{24}$-alkynyl, each of which may optionally be interrupted by heteroatoms such as O, S or N and/or each of which may be substituted by alkyl, aryl and/or hydroxyl,

is used as H-functional starter compound.

**2.** Process according to Claim 1, wherein
$R^1$ = $CH_2$-$CH_2$ or $CH_2$-$CH(CH_3)$,
$R^2$ = $CH_2$-$CH_2$ or $CH_2$-$CH(CH_3)$, and
$R^3$=H.

**3.** Process according to Claim 1, **characterized in that** the urethane alcohol is obtained by reacting propylene carbonate and/or ethylene carbonate with an alkanolamine of formula (III)

$HN(R^3)$-$R^2$-OH (III)

where $R^2$ and $R^3$ are as defined in Claim 1.

**4.** Process according to Claim 3, **characterized in that** the urethane alcohol is obtained by reacting propylene carbonate and/or ethylene carbonate with at least one amine selected from the group consisting of ethanolamine, diethanolamine, (N-methyl)ethanolamine, isopropanolamine, diisopropanolamine and propanolamine.

**5.** Process according to any of Claims 1 to 4, **characterized in that** the alkylene oxide used is at least one alkylene oxide selected from the group consisting of ethylene oxide and propylene oxide.

**6.** Process according to any of Claims 1 to 5, wherein the addition is effected in the presence of at least one DMC catalyst.

**7.** Process according to any of Claims 1 to 5, wherein the addition is effected in the presence of a metal complex catalyst based on the metals zinc and/or cobalt.

**8.** Process according to any of Claims 1 to 6, **characterized in that**

(α) the urethane alcohol of formula (II) or a suspension medium is initially charged and any water and/or other volatile compounds are removed by elevated temperature and/or reduced pressure ("drying"), with addition of the DMC catalyst to the urethane alcohol of formula (II) or to the suspension medium before or after the drying,
(β) activation is accomplished by adding a portion (based on the total amount of alkylene oxides used in the activation and copolymerization) of alkylene oxide to the mixture resulting from step (α), where this portion of alkylene oxide may optionally be added in the presence of $CO_2$ and where the temperature spike ("hotspot") which then occurs due to the exothermic chemical reaction that follows and/or a pressure drop in the reactor is awaited in each case, and where step (β) for activation may also be repeated,
(γ) alkylene oxide, carbon dioxide and optionally urethane alcohol of formula (II) are added to the mixture resulting from step (β),

where at least one urethane alcohol of formula (II) is added as H-functional starter substance at least in one of steps (α) and (γ).

**9.** Process according to any of Claims 1 to 8, wherein one or more urethane alcohols of the formula (II) are metered continuously into the reactor as H-functional starter substance(s) during the reaction.

**10.** Process according to any of Claims 1 to 6 and 8 to 9, wherein one or more urethane alcohols of formula (II), one or more alkylene oxide(s) and DMC catalyst are metered continuously into the reactor in the presence of carbon dioxide ("copolymerization") and wherein the resulting reaction mixture (comprising the reaction product) is removed continuously from the reactor.

**11.** Process according to Claim 10, wherein, in a step (δ), the reaction mixture removed continuously from the reactor with a content of 0.05% by weight to 10% by weight of alkylene oxide is transferred into a postreactor in which, by way of a postreaction, the content of free alkylene oxide is reduced to less than 0.05% by weight in the reaction mixture.

**12.** Polyether carbonate polyols containing a structural unit of the formula (IV)

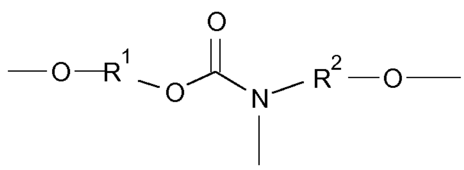

(IV)

where

$R^1 = CH_2\text{-}CH_2$ or $CH_2\text{-}CH(CH_3)$,
$R^2 = CH_2\text{-}CH_2$ or $CH_2\text{-}CH(CH_3)$,
and where $R^1$ and $R^2$ may be identical or different from one another.

**13.** Polyether carbonate polyols according to Claim 12, **characterized in that** they have an OH number of 3 to 400 mg KOH/g, preferably 10 to 200 mg KOH/g.

**14.** Polyether carbonate polyols obtainable by a process according to any of Claims 1 to 11.

**15.** Use of a polyether carbonate polyol according to any of Claims 12 to 14 for preparation of a polyurethane polymer, preferably a flexible polyurethane foam.

**16.** Polyurethane polymer, preferably a flexible polyurethane foam, obtainable by reacting a polyisocyanate with a polyether carbonate polyol according to any of Claims 12 to 14.

**Revendications**

**1.** Procédé de fabrication de polyéther-carbonate-polyols par addition d'oxydes d'alkylène et de dioxyde de carbone sur des composés de départ à fonction H, **caractérisé en ce qu'**au moins un uréthane-alcool selon la formule (II)

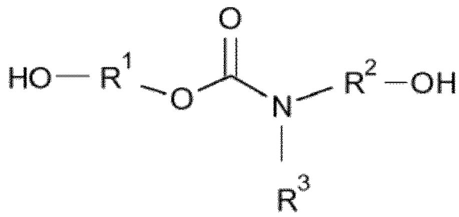

(II)

dans laquelle

$R^1$ signifie alkylène en $C_2$ à $C_{24}$ linéaire ou ramifié, qui peut éventuellement être interrompu par des hétéroatomes tels qu'O, S ou N et peut être substitué,
$R^2$ signifie alkylène en $C_2$ à $C_{24}$ linéaire ou ramifié, qui peut éventuellement être interrompu par des hétéroatomes tels qu'O, S ou N et peut être substitué,
$R^3$ signifie H, alkyle en $C_1$ à $C_{24}$ linéaire ou ramifié, cycloalkyle en $C_3$ à $C_{24}$, aryle en $C_4$ à $C_{24}$, aralkyle en $C_5$ à $C_{24}$, alcényle en $C_2$ à $C_{24}$, alcynyle en $C_2$ à $C_{24}$, qui peuvent chacun éventuellement être interrompus par des hétéroatomes tels qu'O, S ou N et/ou peuvent chacun être substitués avec alkyle, aryle et/ou hydroxyle,

est utilisé en tant que composé de départ à fonction H.

**2.** Procédé selon la revendication 1, dans lequel

$R^1$ signifie $CH_2$-$CH_2$ ou $CH_2$-$CH(CH_3)$,
$R^2$ signifie $CH_2$-$CH_2$ ou $CH_2$-$CH(CH_3)$,
$R^3$ signifie H.

**3.** Procédé selon la revendication 1, **caractérisé en ce que** l'uréthane-alcool est obtenu par mise en réaction de carbonate de propylène et/ou de carbonate d'éthylène avec une alcanolamine selon la formule (III),

$$HN(R^3)\text{-}R^2\text{-}OH \qquad (III)$$

$R^2$ et $R^3$ ayant la signification indiquée dans la revendication 1.

**4.** Procédé selon la revendication 3, **caractérisé en ce que** l'uréthane-alcool est obtenu par mise en réaction de carbonate de propylène et/ou de carbonate d'éthylène avec au moins une amine choisie dans le groupe constitué par l'éthanolamine, la diéthanolamine, la (N-méthyl)-éthanolamine, l'isopropanolamine, la diisopropanolamine et la propanolamine.

**5.** Procédé selon l'une quelconque des revendications 1 à 4, **caractérisé en ce qu'**au moins un oxyde d'alkylène choisi dans le groupe constitué par l'oxyde d'éthylène et l'oxyde de propylène est utilisé en tant qu'oxyde d'alkylène.

**6.** Procédé selon l'une quelconque des revendications 1 à 5, **caractérisé en ce que** l'addition a lieu en présence d'au moins un catalyseur DMC.

**7.** Procédé selon l'une quelconque des revendications 1 à 5, **caractérisé en ce que** l'addition a lieu en présence d'un catalyseur de complexe métallique à base des métaux zinc et/ou cobalt.

**8.** Procédé selon l'une quelconque des revendications 1 à 6, **caractérisé en ce que**

(α) l'uréthane-alcool selon la formule (II) ou un agent de suspension sont chargés, et de l'eau et/ou d'autres composés volatils sont éventuellement éliminés par une température élevée et/ou une pression réduite (« séchage »), le catalyseur DMC étant ajouté à l'uréthane-alcool selon la formule (II) ou à l'agent de suspension avant ou après le séchage,
(β) pour l'activation, une partie (par rapport à la totalité de la quantité d'oxydes d'alkylène utilisée lors de l'activation et de la copolymérisation) de l'oxyde d'alkylène est ajoutée au mélange résultant de l'étape (α), cet ajout d'une partie de l'oxyde d'alkylène pouvant éventuellement avoir lieu en présence de $CO_2$, et le pic de température (« point chaud ») qui se produit alors en raison de la réaction chimique exothermique suivante et/ou une perte de charge dans le réacteur étant chacun attendus, et l'étape (β) pour l'activation pouvant également avoir lieu à plusieurs reprises,
(γ) l'oxyde d'alkylène, le dioxyde de carbone et éventuellement l'uréthane-alcool selon la formule (II) sont ajoutés au mélange résultant de l'étape (β),

au moins un uréthane-alcool selon la formule (II) étant ajouté en tant que substance de départ à fonction H dans au moins une des étapes (α) ou (γ).

**9.** Procédé selon l'une quelconque des revendications 1 à 8, dans lequel un ou plusieurs des uréthane-alcools de formule (II) sont ajoutés en continu dans le réacteur en tant que substance(s) de départ à fonction H pendant la réaction.

**10.** Procédé selon l'une quelconque des revendications 1 à 6 et 8 à 9, dans lequel un ou plusieurs uréthane-alcools selon la formule (II), un ou plusieurs oxydes d'alkylène et un catalyseur DMC sont introduits en présence de dioxyde de carbone (« copolymérisation ») en continu dans le réacteur, et dans lequel le mélange réactionnel résultant (contenant le produit de réaction) est déchargé en continu du réacteur.

**11.** Procédé selon la revendication 10, dans lequel, lors d'une étape (5), le mélange réactionnel déchargé en continu du réacteur ayant une teneur de 0,05 % en poids à 10 % en poids en oxyde d'alkylène est transféré dans un réacteur secondaire, dans lequel la teneur en oxyde d'alkylène libre est réduite à moins de 0,05 % en poids dans le mélange réactionnel au cours d'une réaction secondaire.

**12.** Polyéther-carbonate-polyols contenant une unité structurale de formule (IV),

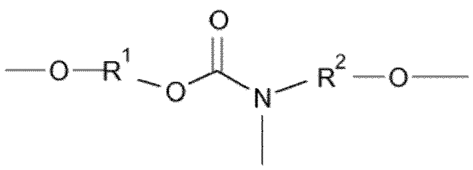

(IV)

dans laquelle

$R^1 = CH_2\text{-}CH_2$ ou $CH_2\text{-}CH(CH_3)$,
$R^2 = CH_2\text{-}CH_2$ ou $CH_2\text{-}CH(CH_3)$,
et $R^1$ et $R^2$ peuvent être identiques ou différents l'un de l'autre.

**13.** Polyéther-carbonate-polyols selon la revendication 12, **caractérisés en ce que** ceux-ci présentent un indice OH de 3 à 400 mg KOH/g, de préférence de 10 à 200 mg KOH/g.

**14.** Polyéther-carbonate-polyols pouvant être obtenus par un procédé selon l'une quelconque des revendications 1 à 11.

**15.** Utilisation d'un polyéther-carbonate-polyol selon selon l'une quelconque des revendications 12 à 14 pour la fabrication d'un polymère de polyuréthane, de préférence d'une mousse souple de polyuréthane.

**16.** Polymère de polyuréthane, de préférence mousse souple de polyuréthane, pouvant être obtenu par mise en réaction d'un polyisocyanate avec un polyéther-carbonate-polyol selon l'une quelconque des revendications 12 à 14.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0222453 A
- WO 2003029325 A
- WO 2008092767 A
- US 3829505 A
- DE 1595759
- US 3654224 A
- EP 2548905 A
- EP 1359177 A
- US 3404109 A
- US 3941849 A
- US 5158922 A
- US 5470813 A
- EP 0700949 A
- EP 0743093 A
- EP 0761708 A
- WO 9740086 A
- WO 9816310 A
- WO 0047649 A
- WO 2011144523 A
- JP 4145123 A
- WO 0139883 A
- WO 0180994 A
- US 4987271 A
- DE 3132258 A
- EP 0406440 A
- US 5391722 A
- US 5099075 A
- US 4721818 A
- US 4877906 A
- EP 0385619 A
- US 3538043 A
- US 4500704 A
- US 5032671 A
- US 6646100 A
- WO 2008013731 A
- US 7304172 B2
- US 20120165549 A1
- EP 0007502 A1


### In der Beschreibung aufgeführte Nicht-Patentliteratur


- **INOUE et al.** Copolymerization of Carbon Dioxide and Epoxide with Organometallic Compounds. *Die Makromolekulare Chemie,* 1969, vol. 130, 210-220
- **M. H. CHISHOLM et al.** *Macromolecules,* 2002, vol. 35, 6494
- **S. D. ALLEN.** *J. Am. Chem. Soc.,* 2002, vol. 124, 14284
- **VON W. SIEFKEN.** *Justus Liebigs Annalen der Chemie,* vol. 562, 75-136